# EUROPEAN PATENT APPLICATION

(11) **EP 4 613 706 A1**
(43) Date of publication of application: **10.09.2025**
(21) Application number: 24849615.0
(22) Date of filing: 31.07.2024
(51) Int. Cl.: C01B 32/174, H01M 4/62

(54) **CARBON NANOTUBE DISPERSION AND METHOD FOR PREPARING SAME**

(30) Priority: 31.07.2023 KR 20230099704; 31.07.2023 KR 20230099719; 31.07.2023 KR 20230099741; 31.07.2023 KR 20230099761; 29.07.2024 KR 20240100228; 29.07.2024 KR 20240100234; 29.07.2024 KR 20240100254; 29.07.2024 KR 20240100258
(71) Applicant: LG CHEM, LTD., Seoul 07336 (KR)
(72) Inventor: WOO, Yu Jin, Daejeon 34122 (KR); JUN, Jaemoon, Daejeon 34122 (KR); CHOE, Junho, Daejeon 34122 (KR); JANG, Youngjin, Daejeon 34122 (KR); YOON, Kiyoul, Daejeon 34122 (KR); MOK, Yeongbong, Daejeon 34122 (KR); YANG, Youngjo, Daejeon 34122 (KR); KIM, Hyunsuk, Daejeon 34122 (KR)
(74) Representative: Hoffmann Eitle
(86) International application number: PCT/KR2024/011251
(87) International publication number: WO 2025/029048

(57) **Abstract**

The present invention relates to a carbon nanotube dispersion comprising carbon nanotubes, a first dispersant containing nitrogen atoms, a second dispersant containing the compound represented by Formula 1, and a solvent, and a method for preparing the same. The content of the compound represented by the Formula 1 is as defined in the specification.

## Description

### [Technical Field]

The present application claims the benefits of priorities based on Korean Patent Application No. 10-2023-0099704 filed on July 31, 2023, Korean Patent Application No. 10-2023-0099719 filed on July 31, 2023, Korean Patent Application No. 10-2023-0099741 filed on July 31, 2023, Korean Patent Application No. 10-2023-0099761 filed on July 31, 2023, Korean Patent Application No. 10-2024-0100228 filed on July 29, 2024, Korean Patent Application No. 10-2024-0100234 filed on July 29, 2024, Korean Patent Application No. 10-2024-0100254 filed on July 29, 2024, and Korean Patent Application No. 10-2024-0100258 filed on July 29, 2024, all the contents of which are incorporated herein as part of this specification.

The present invention relates to carbon nanotube dispersion and its preparation method.

### [Background Art]

As the technology development and demand for mobile devices are increased, the demand for secondary batteries as an energy source is rapidly increasing. Among these secondary batteries, lithium secondary batteries with high energy density and voltage, long cycle lifetime, and low selfdischarging rate have been commercialized and are widely used. In addition, research is actively being conducted on a method for manufacturing an electrode with a higher energy density per unit volume as the electrode for a high-capacity lithium secondary battery by improving the electrode density.

In general, high-density electrodes are formed by molding electrode active material particles with a size of several *µ*m to several tens *µ*m using a high-pressure press. However, during the molding process, the particles may be deformed and the space between the particles may be reduced, which may easily reduce the electrolyte solution permeability.

In order to solve the above problems, an electrically conductive material having excellent electrical conductivity and strength is used during the manufacture of electrodes. The electrically conductive materials are positioned between electrode active materials, and even when going through a molding process, they maintain micropores between active material particles, thereby allowing the electrolyte solution to easily penetrate, and have excellent electrical conductivity, thereby reducing resistance within the electrode. Among these electrically conductive materials, the use of carbon nanotubes, which are fiber-type carbon-based electrically conductive materials that can further reduce electrode resistance by forming an electrically conductive path within the electrode, is increasing.

The carbon nanotubes, which are a type of micro carbon fibers, are tubular carbon fibers with a diameter of 1 *µ*m or less, and are expected to be applied to and commercialized in various fields due to their high electrical conductivity, tensile strength, and heat resistance caused by their specific structure. However, the carbon nanotubes have a problem that they have low dispersibility and an agglomeration phenomenon occurs due to the strong van der Waals attraction between them due to their high specific surface area.

In order to solve these problems, a method of dispersing carbon nanotubes in a dispersion medium through mechanical dispersion treatment such as ultrasonic treatment has been proposed. However, in the case of the mechanical dispersion treatment method, there is a problem that the carbon nanotubes are agglomerated as soon as the ultrasonic irradiation is ended, or are agglomerated again over time after dispersion.

Accordingly, there is a need to develop a method for preparing a carbon nanotube dispersion that can improve the dispersibility of carbon nanotubes while having low viscosity and suppressing the increase in viscosity over time.

### [Prior Art Documents]

### [Patent Documents]

(Patent Document 1) US Laid-open Patent Publication No. 2017-0129804 (2017.05.11)
(Patent Document 2) Chinese Laid-open Patent Publication No. 001699155(2005.11.23)

### [Disclosure]

### [Technical Problem]

It is an object of the present invention to provide a carbon nanotube dispersion comprising carbon nanotube, a first dispersant containing nitrogen atoms, a second dispersant containing a compound represented by Formula 1 below and a solvent, which has excellent dispersibility, and thus has low viscosity of dispersion and small particle size of dispersed particles, and has small change in viscosity over time. 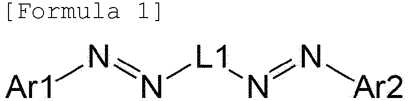 wherein,
Ar1 and Ar2 are each independently a substituted or unsubstituted C6 to C30 aryl group, and
L1 is a substituted or unsubstituted C6 to C30 arylene group.
It is another object of the present invention to provide a method for preparing the carbon nanotube dispersion.

### [Technical Solution]

One embodiment of the present invention provides a carbon nanotube dispersion comprising carbon nanotube, a first dispersant containing nitrogen atoms, a second dispersant containing the compound represented by Formula 1 below and a solvent. 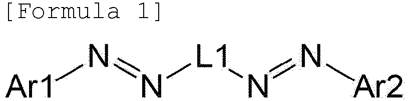 wherein,
Ar1 and Ar2 are each independently a substituted or unsubstituted C6 to C30 aryl group, and
L1 is a substituted or unsubstituted C6 to C30 arylene group.

Ar1 and Ar2 in the Formula 1 may be represented by Formula 2 or Formula 3 below, respectively. 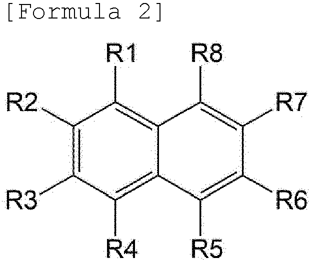 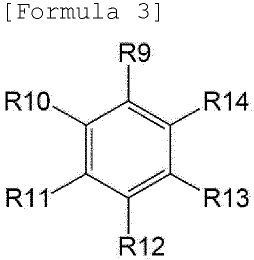 in the Formula 2,
R1 to R8 are the same as or different from each other, and are each independently hydrogen; deuterium; halogen; a cyano group; a sulfonate group; a hydroxyl group; an amine group; a nitro group; a substituted or unsubstituted C1 to C10 alkyl group; a substituted or unsubstituted C1 to C10 alkoxy group; or a part that connects to Formula 2, provided that any one of the R1 to R8 is a part connected to an azo group in Formula 1, and
in the Formula 3,
R9 to R14 are the same as or different from each other, and are each independently hydrogen; deuterium; halogen; a cyano group; a sulfonate group; an amine group; a nitro group; a substituted or unsubstituted C1 to C10 alkyl group; a substituted or unsubstituted C1 to C10 alkoxy group; or a part that connects to Formula 3, provided that any one of the R9 to R14 is a part connected to an azo group in Formula 1.

L1 in Formula 1 may be represented by Formula 4 or Formula 5 below: 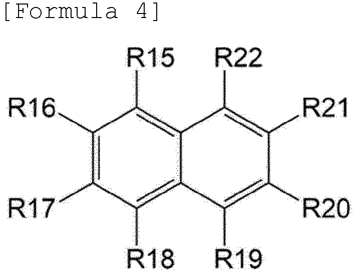 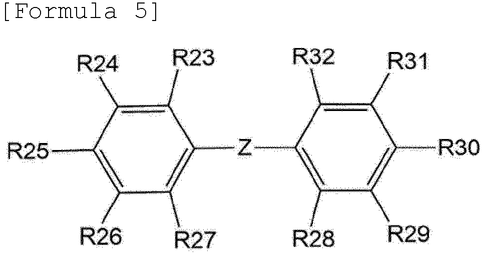 in the Formula 4,
R15 to R18 are the same as or different from each other, and are each independently hydrogen; deuterium; halogen; a cyano group; a sulfonate group; a hydroxyl group; an amine group; a nitro group; or the part that connects to Formula 1, provided that any one of the R15 to R18 is the part that connects to the nitrogen atom, to which Ar1 is not connected, among two nitrogen atoms of the Ar1-connected azo group of the two azo groups of Formula 1, and R19 to R22 are the same as or different from each other, and are each independently hydrogen; deuterium; halogen; a cyano group; a sulfonate group; a hydroxyl group; an amine group; a nitro group; or the part that connects to Formula 1, provided that any one of the R19 to R22 is the part that connects to the nitrogen atom, to which Ar2 is not connected, among two nitrogen atoms of the Ar2-connected azo group of the two azo groups of Formula 1; and
in the Formula 5,
R23 to R27 are the same as or different from each other, and are each independently hydrogen; deuterium; halogen; a cyano group; a sulfonate group; a hydroxyl group; an amine group; a nitro group; a substituted or unsubstituted C1 to C5 alkyl group; a substituted or unsubstituted C1 to C5 alkoxy group; or the part that connects to the nitrogen atom, to which Ar1 is not connected, among two nitrogen atoms of the Ar1-connected azo group of the two azo groups of Formula 1, provided that any one of the R23 to R27 is the part that connects to the nitrogen atom, to which Ar1 is not connected, among two nitrogen atoms of the Ar1-connected azo group of the two azo groups of Formula 1, and R28 to R32 are the same as or different from each other, and are each independently hydrogen; deuterium; halogen; a cyano group; a sulfonate group; a hydroxyl group; an amine group; a nitro group; a substituted or unsubstituted C1 to C5 alkyl group; a substituted or unsubstituted C1 to C5 alkoxy group; or the part that connects to the nitrogen atom, to which Ar2 is not connected, among two nitrogen atoms of the Ar2-connected azo group of the two azo groups of Formula 1, provided that any one of the R28 to R32 is the part that connects to the nitrogen atom, to which Ar2 is not connected, among two nitrogen atoms of the Ar2-connected azo group of the two azo groups of Formula 1, and
Z is a single bond; a substituted or unsubstituted C2 to C10 alkenylene group; or a substituted or unsubstituted C2 to C10 alkynylene group.

The second dispersant may comprise the compound represented by any one of Formula 1-1a to Formula 1-1d below: 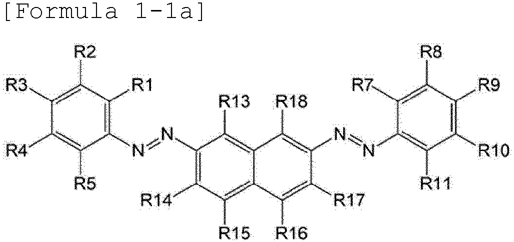 wherein,
R1 to R5, R7 to R11, and R13 to R18 are the same as or different from each other, and are each independently hydrogen; deuterium; halogen; a cyano group; a sulfonate group; a hydroxyl group; an amine group; or a nitro group; 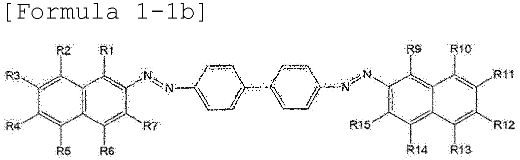
wherein,
R1 to R7 and R9 to R15 are the same as or different from each other and are each independently hydrogen; deuterium; halogen; a cyano group; a sulfonate group; a hydroxyl group; an amine group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; or a substituted or unsubstituted C6 to C20 aryl group, provided that at least one of R1 to R7 is a sulfonate group, and at least one of R9 to R15 is a sulfonate group; 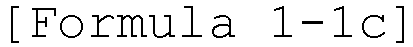 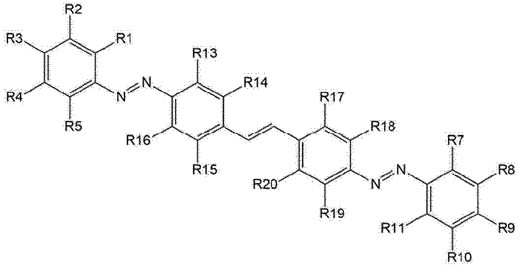
wherein,
R1 to R5 and R7 to R11 are the same as or different from each other, and are each independently hydrogen; deuterium; halogen; a cyano group; a sulfonate group; a hydroxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C6 to C20 aryl group; or a substituted or unsubstituted C2 to C20 heteroaryl group, provided that at least one of R1 to R5 is a hydroxyl group, and at least one of R7 to R11 is a hydroxyl group, and
R13 to R20 are the same as or different from each other, and are each independently hydrogen; deuterium; halogen; a cyano group; a sulfonate group; a hydroxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C6 to C20 aryl group; or a substituted or unsubstituted C2 to C20 heteroaryl group, provided that at least one of R13 to R16 is a sulfonate group, and at least one of R17 to R20 is a sulfonate group; 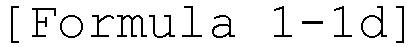 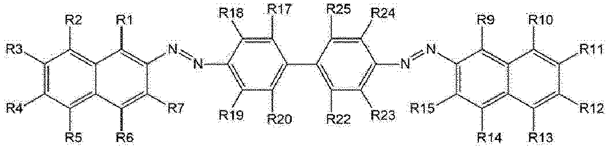
wherein,
R1 to R7 and R9 to R15 are the same as or different from each other and are each independently hydrogen; deuterium; halogen; a cyano group; a sulfonate group; a hydroxyl group; an amine group; or a nitro group, and
R17 to R20 and R22 to R25 are the same as or different from each other, and are each independently hydrogen; deuterium; halogen; a cyano group; a sulfonate group; a hydroxyl group; an amine group; a nitro group; a substituted or unsubstituted C1 to C5 alkyl group; or a substituted or unsubstituted C1 to C5 alkoxy group.

The carbon nanotubes may be contained in an amount of 0.05 to 5 parts by weight based on 100 parts by weight of the carbon nanotube dispersion.

The BET specific surface area of the carbon nanotubes may be 800 to 2,000 m²/g.

The first dispersant may be at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, and polyethylenimine.

The first dispersant may be contained in an amount of 0.01 to 10 parts by weight based on 100 parts by weight of the carbon nanotube dispersion.

The second dispersant may be contained in an amount of 0.001 to 9 parts by weight based on 100 parts by weight of the carbon nanotube dispersion.

The first dispersant and the second dispersant may be contained in a weight ratio of 100:10 to 100:90.

The carbon nanotube dispersion may have an initial viscosity of 1 to 10 Pa·s as measured at 25 °C and 1 rpm.

The carbon nanotube dispersion may have a viscosity increase rate of 15% or less, as expressed by Equation 1 below. Viscosity increase rate(%) = {(viscosity measured after leaving for 1 week at 25°C - initial viscosity)/initial viscosity} × 100

Another embodiment of the present invention provides a method for preparing a carbon nanotube dispersion comprising the steps of (1) preparing a primary dispersion of carbon nanotubes by mixing carbon nanotubes, a first dispersant containing nitrogen atoms, a second dispersant containing a compound represented by Formula 1 and a solvent and (2) dispersing the primary dispersion of the carbon nanotubes to prepare a secondary dispersion of carbon nanotubes.

### [Advantageous Effects]

The carbon nanotube dispersion according to the present invention uses a first dispersant containing nitrogen atoms together with a second dispersant containing a compound represented by the Formula 1, and thus, it has the characteristics that despite using carbon nanotubes having a large specific surface area, the change in viscosity of the dispersion over time is small, the viscosity is relatively low, and the carbon nanotubes are uniformly and effectively dispersed and thus the particle size of the dispersed particles is small.

### [Best Mode]

Hereinafter, embodiments of the present invention will be described in detail. Prior to this, terms or words used in this specification and claims should not be interpreted as limited to their usual or dictionary meanings, and should be interpreted as meanings and concepts that conform to the technical idea of the present invention based on the principle that the inventor may appropriately define the concept of the term in order to explain his own invention in the best way. Therefore, it should be understood that the configurations described in the embodiments described in this specification are only one of the most preferred embodiments of the present invention and do not represent all of the technical ideas of the present invention, and thus there may be various equivalents and modifications that may replace these at the time of filing of this application.

In this specification, the term "substitution" means that a hydrogen atom bonded to a carbon atom of a compound is changed into another substituent, and a position to be substituted is not limited as long as the position is a position at which the hydrogen atom is substituted, that is, a position at which the substituent may be substituted, and when two or more are substituted, the two or more substituents may be the same as or different from each other.

In this specification, the term "substituted or unsubstituted" means being substituted or unsubstituted with one or more substituents selected from the group consisting of deuterium; halogen; a cyano group; a straight or branched C1 to C60 alkyl group; a straight or branched C2 to C60 alkenyl group; a straight or branched C2 to C60 alkynyl group; a monocyclic or polycyclic C3 to C60 cycloalkyl group; a monocyclic or polycyclic C2 to C60 heterocycloalkyl group; a monocyclic or polycyclic C6 to C60 aryl group; a monocyclic or polycyclic C2 to C60 heteroaryl group; a C1 to C20 alkylamine group; a monocyclic or polycyclic C6 to C60 arylamine group; and a monocyclic or polycyclic C2 to C60 heteroarylamine group, or being substituted or unsubstituted with a substituent formed by connecting two or more substituents selected from the above-exemplified substituents.

Throughout this specification, when a part is said to 'comprise' a component, this does not mean that it excludes other components, but that it may further comprise other components, unless otherwise specifically stated.

Throughout this specification, "%" means % by weight, unless otherwise explicitly stated.

In this specification, the average particle size "D₅₀" means the particle size corresponding to 50% of the volume accumulation. The D₅₀ can be measured, for example, using a laser diffraction method. The laser diffraction method can generally measure particle sizes from the submicron range to several mm, and can obtain results with high reproducibility and high resolution.

In this specification, the "specific surface area" is measured by Brunauer-Emmett-Teller Analysis, and can be specifically calculated from the nitrogen gas adsorption amount at liquid nitrogen temperature (77K) using BELSORP-mino II of BEL Japan company.

### Carbon nanotube dispersion

The carbon nanotube dispersion according to the present invention includes a carbon nanotube, a first dispersant containing nitrogen atoms, a second dispersant containing a compound represented by Formula 1, and a solvent. Hereinafter, each component of the carbon nanotube dispersion of the present invention will be described in detail.

### (1) Carbon nanotube

The term 'carbon nanotube' used in the present invention refers to a secondary structure formed by assembling the units of carbon nanotubes to form a bundle type in whole or in part, wherein the unit of the carbon nanotubes is a graphite sheet in the form of a cylinder with a nano-sized diameter and has a sp² bonding structure. At this time, depending on the angle and structure at which the graphite sheet is rolled, it can exhibit the characteristics of a conductor or semiconductor. The unit of carbon nanotubes may be classified into single-walled carbon nanotube (SWCNT), double-walled carbon nanotube (DWCNT), and multi-walled carbon nanotube (MWCNT) depending on the number of bonds forming the wall.

The term 'bundle type' used in the present invention, unless otherwise stated, refers to a secondary shape in the form of a bundle or rope in which multiple units of carbon nanotubes are arranged in a parallel manner with the longitudinal axes of the units substantially in the same orientation or are twisted or entangled after being arranged. 'Non-bundle type or entangled type' refers to the form in which the units of carbon nanotubes are entangled without a specific shape such as a bundle or rope.

The carbon nanotubes have high conductivity, but they have high agglomeration characteristics due to the van der Waals force that occurs between carbon nanotubes. When an electrically conductive material is agglomerated, a conductive path cannot be properly formed within the electrode, and more electrically conductive material is used to increase conductivity, and thus the amount of the active material is relatively reduced, so the performance, such as the capacity of the electrode, may be reduced. Therefore, it has been difficult to commercialize carbon nanotubes as an electrically conductive material.

The carbon nanotube dispersion according to the present invention comprises a first dispersant containing nitrogen atoms and a second dispersant containing a compound represented by Formula 1, and thus it is possible to significantly reduce the initial viscosity of carbon nanotube dispersion, suppress changes in viscosity over time, and simultaneously maintain a low particle size of dispersed particles.

The carbon nanotube dispersion according to one embodiment of the present invention may comprise at least one of single-walled, double-walled and multi-walled carbon nanotubes as the carbon nanotube, but is not limited thereto, and specifically may comprise a single-walled carbon nanotube. Since the single-walled carbon nanotube or double-walled carbon nanotube has a higher specific surface area than the multi-walled carbon nanotube, it is more effective in improving cycle characteristics when applied to a secondary battery.

Meanwhile, the carbon nanotubes may have an average diameter of, for example, 0.6 to 10 nm, preferably 0.8 to 5 nm, and more preferably 0.8 to 3 nm, and may have an average diameter of 0.8 nm or more, 0.9 nm or more, 1.0 nm or more, 1.1 nm or more, 1.2 nm or more, 1.3 nm or more, 1.4 nm or more, 1.5 nm or more, 1.6 nm or more, 1.7 nm or more, 1.8 nm or more or 1.9 nm or more, and may have an average diameter of 3.0 nm or less, 2.9 nm or less, 2.8 nm or less, 2.7 nm or less, 2.6 nm or less, 2.5 nm or less, 2.4 nm or less, 2.3 nm or less, 2.2 nm or less, 2.1 nm or less or 2.0 nm or less.

In addition, the carbon nanotube may have an average length of 0.5 to 20 *µ*m, preferably 1 to 20 *µ*m, and more preferably 5 to 20 *µ*m, and may have an average length of 5 *µ*m or more, 7 *µ*m or more, 9 *µ*m or more, 11 *µ*m or more or 13 *µ*m or more, and may have an average length of 20 *µ*m or less, 18 *µ*m or less, 16 *µ*m or less or 14 *µ*m or less. If the average diameter and average length of the carbon nanotubes satisfy the above range, it is effective in reducing the viscosity of the dispersion and improving the storage stability, and can also implement excellent cycle characteristics when applied to the electrode active material.

In these cases, the average diameter of the carbon nanotubes can be measured by photographing the carbon nanotube powder with a scanning electron microscope, and the average length of the carbon nanotubes can be measured by photographing the carbon nanotube dispersion with a scanning electron microscope.

The carbon nanotubes may be contained in an amount of 0.05 to 5 parts by weight based on a total of 100 parts by weight of the carbon nanotube dispersion, and may be contained in an amount of 0.05 parts by weight or more, 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, 1.0 parts by weight or more, 1.1 parts by weight or more, 1.2 parts by weight or more, 1.3 parts by weight or more, 1.4 parts by weight or more, 1.5 parts by weight or more, 1.6 parts by weight or more, 1.7 parts by weight or more, 1.8 parts by weight or more, 1.9 parts by weight or more, 2.0 parts by weight or more, 2.1 parts by weight or more, 2.2 parts by weight or more, 2.3 parts by weight or more, 2.4 parts by weight or more or 2.5 parts by weight or more, and may be contained in an amount of 5 parts by weight or less, 4.9 parts by weight or less, 4.8 parts by weight or less, 4.7 parts by weight or less, 4.6 parts by weight or less, 4.5 parts by weight or less, 4.4 parts by weight or less, 4.3 parts by weight or less, 4.2 parts by weight or less, 4.1 parts by weight or less, 4 parts by weight or less, 3.9 parts by weight or less, 3.8 parts by weight or less, 3.7 parts by weight or less, 3.6 parts by weight or less, 3.5 parts by weight or less, 3.4 parts by weight or less, 3.3 parts by weight or less, 3.2 parts by weight or less, 3.1 parts by weight or less, 3 parts by weight or less, 2.9 parts by weight or less, 2.8 parts by weight or less, 2.7 parts by weight or less or 2.6 parts by weight or less. If the content of carbon nanotubes satisfies the above range, the effect of improving the viscosity of the dispersion and the effect of improving the electrical conductivity of a secondary battery manufactured through the carbon nanotube dispersion are excellent.

The BET specific surface area of the carbon nanotubes may be 800 m²/g to 2,000 m²/g, and for example, may be 800 m²/g or more, 810 m²/g or more, 820 m²/g or more, 830 m²/g or more, 840 m²/g or more, 850 m²/g or more, 860 m²/g or more, 870 m²/g or more, 880 m²/g or more, 890 m²/g or more, 900 m²/g or more, 910 m²/g or more, 920 m²/g or more, 930 m²/g or more, 940 m²/g or more, 950 m²/g or more, 960 m²/g or more, 970 m²/g or more, 980 m²/g or more, 990 m²/g or more, 1,000 m²/g or more, 1,010 m²/g or more, 1,020 m²/g or more, 1,030 m²/g or more, 1,040 m²/g or more, 1,050 m²/g or more, 1,060 m²/g or more, 1,070 m²/g or more, 1,080 m²/g or more, 1,090 m²/g or more, 1,100 m²/g or more, 1,110 m²/g or more, 1,120 m²/g or more, 1,130 m²/g or more, 1,140 m²/g or more, 1,150 m²/g or more, 1,160 m²/g or more, 1,170 m²/g or more, 1,180 m²/g or more, 1,190 m²/g or more, 1,200 m²/g or more, 1,210 m²/g or more, 1,220 m²/g or more, 1,230 m²/g or more, 1,240 m²/g or more, 1,250 m²/g or more, 1,260 m²/g or more, 1,270 m²/g or more, 1,280 m²/g or more, 1,290 m²/g or more, 1,300 m²/g or more, 1,310 m²/g or more, 1,320 m²/g or more, 1,330 m²/g or more, 1,340 m²/g or more, 1,350 m²/g or more, 1,360 m²/g or more, 1,370 m²/g or more, 1,380 m²/g or more, 1,390 m²/g or more or 1,400 m²/g or more, and may be 2,000 m²/g or less, 1,990 m²/g or less, 1,980 m²/g or less, 1,970 m²/g or less, 1,960 m²/g or less, 1,950 m²/g or less, 1,940 m²/g or less, 1,930 m²/g or less, 1,920 m²/g or less, 1,910 m²/g or less, 1,900 m²/g or less, 1,890 m²/g or less, 1,880 m²/g or less, 1,870 m²/g or less, 1,860 m²/g or less, 1,850 m²/g or less, 1,840 m²/g or less, 1,830 m²/g or less, 1,820 m²/g or less, 1,810 m²/g or less, 1,800 m²/g or less, 1,790 m²/g or less, 1,780 m²/g or less, 1,770 m²/g or less, 1,760 m²/g or less, 1,750 m²/g or less, 1,740 m²/g or less, 1,730 m²/g or less, 1,720 m²/g or less, 1,710 m²/g or less, 1,700 m²/g or less, 1,690 m²/g or less, 1,680 m²/g or less, 1,670 m²/g or less, 1,660 m²/g or less, 1,650 m²/g or less, 1,640 m²/g or less, 1,630 m²/g or less, 1,620 m²/g or less, 1,610 m²/g or less, 1,600 m²/g or less, 1,590 m²/g or less, 1,580 m²/g or less, 1,570 m²/g or less, 1,560 m²/g or less, 1,550 m²/g or less, 1,540 m²/g or less, 1,530 m²/g or less, 1,520 m²/g or less, 1,510 m²/g or less, 1,500 m²/g or less, 1,490 m²/g or less, 1,480 m²/g or less, 1,470 m²/g or less, 1,460 m²/g or less, 1,450 m²/g or less, 1,440 m²/g or less, 1,430 m²/g or less, 1,420 m²/g or less or 1,410 m²/g or less. If the carbon nanotubes having a high BET specific surface area as described above are used, the formation of a conducting network between electrode active materials is excellent, and thus the cycle characteristics of a secondary battery manufactured through the carbon nanotube dispersion may be improved.

The carbon nanotube dispersion according to one embodiment of the present invention can have a relatively high carbon nanotube content because the carbon nanotubes can be uniformly dispersed. If a carbon nanotube dispersion having a low carbon nanotube content is used in the preparation of electrode slurry, since the solid content of the prepared electrode slurry is reduced, the thickness (wet thickness) before applying and drying the electrode slurry becomes thicker, and the rolling rate measured after the subsequent drying and rolling treatment becomes higher, and thus the difference in the thickness ratio before and after drying and rolling becomes larger. As such, if the rolling ratio is increased, the compositions inside the slurry, including the positive electrode active material, may be damaged during the process, which may result in a problem of reduced battery performance.

### (2) Dispersant

The carbon nanotube dispersion according to the present invention comprises dispersants to improve the dispersibility of the carbon nanotubes, and comprises a first dispersant containing nitrogen atoms and a second dispersant comprising the compound represented by Formula 1 below as the dispersants. 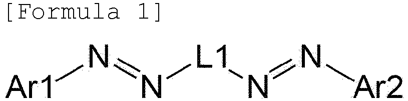 wherein,
Ar1 and Ar2 are each independently a substituted or unsubstituted C6 to C30 aryl group,
L1 is a substituted or unsubstituted C6 to C30 arylene group.

In the carbon nanotube dispersion, the first dispersant and the second dispersant play a role in increasing the dispersibility of the carbon nanotubes so that the carbon nanotubes can be evenly dispersed without agglomeration in the dispersion, and in particular, play a role in suppressing changes in the viscosity of the carbon nanotube dispersion over time and lowering the average particle size of the dispersed particles.

In the carbon nanotube dispersion according to one embodiment of the present invention, the first dispersant containing nitrogen atoms may be soluble in an aqueous solvent to be described later, and may be, for example, at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride and polyethylenimine, and preferably may be polyvinylpyrrolidone. The carbon nanotube dispersion according to one embodiment of the present invention can exhibit an effect of improving the viscosity of the dispersion and an effect of suppressing changes in viscosity over time by including the first dispersant containing the nitrogen atoms.

In one embodiment of the present invention, the first dispersant may be contained in an amount of 0.01 to 10 parts by weight based on 100 parts by weight of the carbon nanotube dispersion, and for example, may be contained in an amount of 0.01 parts by weight or more, 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, 1 parts by weight or more, 1.1 parts by weight or more, 1.2 parts by weight or more, 1.3 parts by weight or more, 1.4 parts by weight or more, 1.5 parts by weight or more, 1.6 parts by weight or more, 1.7 parts by weight or more, 1.8 parts by weight or more, 1.9 parts by weight or more, 2 parts by weight or more, 2.1 parts by weight or more, 2.2 parts by weight or more, 2.3 parts by weight or more, 2.4 parts by weight or more, 2.5 parts by weight or more, 2.6 parts by weight or more, 2.7 parts by weight or more, 2.8 parts by weight or more, 2.9 parts by weight or more, 3 parts by weight or more, 3.1 parts by weight or more, 3.2 parts by weight or more, 3.3 parts by weight or more, 3.4 parts by weight or more,3.5 parts by weight or more, 3.6 parts by weight or more, 3.7 parts by weight or more, 3.8 parts by weight or more, 3.9 parts by weight or more, 4 parts by weight or more, 4.1 parts by weight or more, 4.2 parts by weight or more, 4.3 parts by weight or more, 4.4 parts by weight or more, 4.5 parts by weight or more, 4.6 parts by weight or more, 4.7 parts by weight or more, 4.8 parts by weight or more, 4.9 parts by weight or more or 5 parts by weight or more, and may be contained in an amount of 10 parts by weight or less, 9.9 parts by weight or less, 9.8 parts by weight or less, 9.7 parts by weight or less, 9.6 parts by weight or less, 9.5 parts by weight or less, 9.4 parts by weight or less, 9.3 parts by weight or less, 9.2 parts by weight or less, 9.1 parts by weight or less, 9 parts by weight or less, 8.9 parts by weight or less, 8.8 parts by weight or less, 8.7 parts by weight or less, 8.6 parts by weight or less, 8.5 parts by weight or less, 8.4 parts by weight or less, 8.3 parts by weight or less, 8.2 parts by weight or less, 8.1 parts by weight or less, 8 parts by weight or less, 7.9 parts by weight or less, 7.8 parts by weight or less, 7.7 parts by weight or less, 7.6 parts by weight or less, 7.5 parts by weight or less, 7.4 parts by weight or less, 7.3 parts by weight or less, 7.2 parts by weight or less, 7.1 parts by weight or less, 7 parts by weight or less, 6.9 parts by weight or less, 6.8 parts by weight or less, 6.7 parts by weight or less, 6.6 parts by weight or less, 6.5 parts by weight or less, 6.4 parts by weight or less, 6.3 parts by weight or less, 6.2 parts by weight or less, 6.1 parts by weight or less, 6 parts by weight or less, 5.9 parts by weight or less, 5.8 parts by weight or less, 5.7 parts by weight or less, 5.6 parts by weight or less, 5.5 parts by weight or less, 5.4 parts by weight or less, 5.3 parts by weight or less, 5.2 parts by weight or less or 5.1 parts by weight or less.

If the content of the first dispersant is less than 0.01 parts by weight based on 100 parts by weight of the carbon nanotube dispersion, there may be a problem that the content of the dispersant is insufficient, so that the dispersion does not have a sufficient dispersion effect, and thus the viscosity of the dispersion is not formed low, and the viscosity is increased over time. If the content of the first dispersant exceeds 10 parts by weight, there may be a problem that the viscosity of the dispersion is formed high due to agglomeration between solids in the dispersion caused by excessive content of the first dispersant.

Also, in order to solve the problem that the viscosity of the dispersion is increased as the content of carbon nanotubes is increased in the carbon nanotube dispersion comprising only the first dispersant, the carbon nanotube dispersion according to one embodiment of the present invention includes the second dispersant comprising the compound represented by Formula 1 below together with the first dispersant, and accordingly, it has excellent dispersibility, as compared to the conventional carbon nanotube dispersion using only the dispersant, and it can exhibit effects such as less agglomeration of particles of the slurry composition and a low sedimentation velocity. 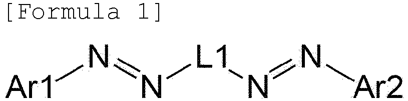 wherein,
Ar1 and Ar2 are each independently a substituted or unsubstituted C6 to C30 aryl group, and
L1 is a substituted or unsubstituted C6 to C30 arylene group.

In one embodiment of the present invention, Ar1 in the Formula 1 may be a substituted or unsubstituted C6 to C30 aryl group.

In one embodiment of the present invention, Ar1 in the Formula 1 may be a substituted or unsubstituted C6 to C20 aryl group.

In one embodiment of the present invention, Ar1 in the Formula 1 may be a substituted or unsubstituted C6 to C10 aryl group.

In one embodiment of the present invention, Ar1 in the Formula 1 may be a substituted or unsubstituted phenyl group; or a substituted or unsubstituted naphthalene group.

In one embodiment of the present invention, Ar2 in the Formula 1 may be a substituted or unsubstituted C6 to C30 aryl group.

In one embodiment of the present invention, Ar2 in the Formula 1 may be a substituted or unsubstituted C6 to C20 aryl group.

In one embodiment of the present invention, Ar2 in the Formula 1 may be a substituted or unsubstituted C6 to C10 aryl group.

In one embodiment of the present invention, Ar2 in the Formula 1 may be a substituted or unsubstituted phenyl group; or a substituted or unsubstituted naphthalene group.

In one embodiment of the present invention, L1 in the Formula 1 may be a substituted or unsubstituted C6 to C30 arylene group.

In one embodiment of the present invention, L1 in the Formula 1 may be a substituted or unsubstituted C6 to C20 arylene group.

In one embodiment of the present invention, L1 in the Formula 1 may be a substituted or unsubstituted C6 to C10 arylene group.

In one embodiment of the present invention, Ar1 and Ar2 in the Formula 1 can be represented by Formula 2 or Formula 3 below, respectively. 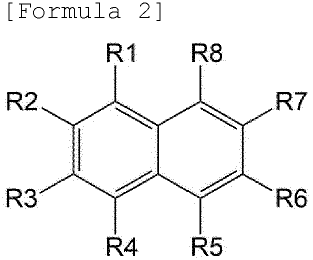 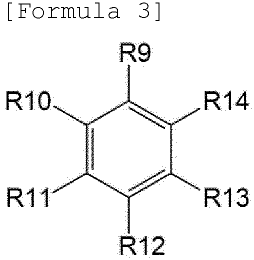 in the Formula 2,
R1 to R8 are the same as or different from each other, and are each independently hydrogen; deuterium; halogen; a cyano group; a sulfonate group; a hydroxyl group; an amine group; a nitro group; a substituted or unsubstituted C1 to C10 alkyl group; a substituted or unsubstituted C1 to C10 alkoxy group; or a part that connects to Formula 2, provided that any one of the R1 to R8 is a part connected to an azo group in Formula 1, and
in the Formula 3
R9 to R14 are the same as or different from each other, and are each independently hydrogen; deuterium; halogen; a cyano group; a sulfonate group; an amine group; a nitro group; a substituted or unsubstituted C1 to C10 alkyl group; a substituted or unsubstituted C1 to C10 alkoxy group; or a part that connects to Formula 3, provided that any one of the R9 to R14 is a part connected to an azo group in Formula 1.

In one embodiment of the present invention, Ar1 in the Formula 1 is represented by the Formula 2, R1 to R8 in Formula 2 are the same as or different from each other, and are each independently hydrogen; deuterium; halogen; a sulfonate group; a hydroxyl group; or the part that connects to Formula 1, provided that any one of the R1 to R8 may be the part connected to an azo group in Formula 1.

In one embodiment of the present invention, Ar2 in the Formula 1 is represented by the Formula 2, R1 to R8 in Formula 2 are the same as or different from each other, and are each independently hydrogen; deuterium; halogen; a sulfonate group; a hydroxyl group; or the part that connects to Formula 1, provided that any one of the R1 to R8 may be the part connected to an azo group in Formula 1.

In one embodiment of the present invention, Ar1 in the Formula 1 is represented by the Formula 3, R9 to R14 in Formula 3 are the same as or different from each other, and are each independently hydrogen; deuterium; halogen; a sulfonate group; a hydroxyl group; or the part that connects to Formula 1, provided that any one of the R9 to R14 may be the part connected to an azo group in Formula 1.

In one embodiment of the present invention, Ar2 in the Formula 1 is represented by the Formula 3, R9 to R14 in Formula 3 are the same as or different from each other, and are each independently hydrogen; deuterium; halogen; a sulfonate group; a hydroxyl group; or the part that connects to Formula 1, provided that any one of the R9 to R14 may be the part connected to an azo group in Formula 1.

In one embodiment of the present invention, Ar1 in the Formula 1 is represented by the Formula 2, and at least one of the remaining groups except for the part connected to an azo group in Formula 1 from R1 to R8 in Formula 2 may be a sulfonate group.

In one embodiment of the present invention, Ar2 in the Formula 1 is represented by the Formula 2, and at least one of the remaining groups except for the part connected to an azo group in Formula 1 from R1 to R8 in Formula 2 may be a sulfonate group.

In one embodiment of the present invention, Ar1 in the Formula 1 is represented by the Formula 3, and at least one of the remaining groups except for the part connected to an azo group in Formula 1 from R9 to R14 in Formula 3 may be a halogen group.

In one embodiment of the present invention, Ar2 in the Formula 1 is represented by the Formula 3, and at least one of the remaining groups except for the part connected to an azo group in Formula 1 from R9 to R14 in Formula 3 may be a halogen group.

In one embodiment of the present invention, Ar1 in the Formula 1 is represented by the Formula 3, and at least one of the remaining groups except for the part connected to an azo group in Formula 1 from R9 to R14 in Formula 3 may be a hydroxyl group.

In one embodiment of the present invention, Ar2 in the Formula 1 is represented by the Formula 3, and at least one of the remaining groups except for the part connected to an azo group in Formula 1 from R9 to R14 in Formula 3 may be a hydroxyl group.

In one embodiment of the present invention, Ar1 in the Formula 1 is represented by the Formula 3, and may include at least one chloro group, a sulfonate group and a hydroxyl group, excluding the part connected to an azo group in Formula 1 from R9 to R14 in Formula 3.

In one embodiment of the present invention, Ar2 in the Formula 1 is represented by the Formula 3, and may include at least one chloro group, a sulfonate group and a hydroxyl group, excluding the part connected to an azo group in Formula 1 from R9 to R14 in Formula 3.

In one embodiment of the present invention, Ar1 in the Formula 1 is represented by the Formula 3, and may include at least one hydroxyl group and at least two sulfonate groups, excluding the part connected to an azo group in Formula 1 from R9 to R14 in Formula 3.

In one embodiment of the present invention, Ar2 in the Formula 1 is represented by the Formula 3, and may include at least one hydroxyl group and at least two sulfonate groups, excluding the part connected to an azo group in Formula 1 from R9 to R14 in Formula 3.

In one embodiment of the present invention, Ar1 in the Formula 1 is represented by the Formula 3, and may include at least one hydroxyl group, two or more sulfonate groups and amine groups, excluding the part connected to an azo group in Formula 1 from R9 to R14 in Formula 3.

In one embodiment of the present invention, Ar2 in the Formula 1 is represented by the Formula 3, and may include at least one hydroxyl group, two or more sulfonate groups and amine groups, excluding the part connected to an azo group in Formula 1 from R9 to R14 in Formula 3.

In one embodiment of the present invention, when at least one of R1 to R14 in Formulas 2 and 3 is a sulfonate group, the anion of the sulfonate group may be in the form of a salt combined with a metal cation, and specifically, may be a sodium salt or calcium salt of the sulfonate group.

In one embodiment of the present invention, L1 of the Formula 1 may be represented by Formula 4 or Formula 5 below. 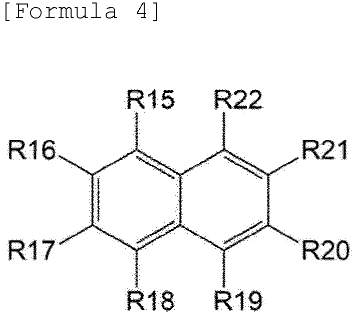 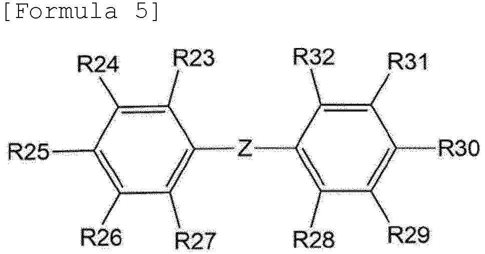 in the Formula 4,
R15 to R18 are the same as or different from each other, and are each independently hydrogen; deuterium; halogen; a cyano group; a sulfonate group; a hydroxyl group; an amine group; a nitro group; or the part that connects to Formula 1, provided that any one of the R15 to R18 is the part that connects to the nitrogen atom, to which Ar1 is not connected, among two nitrogen atoms of the Ar1-connected azo group of the two azo groups of Formula 1, and R19 to R22 are the same as or different from each other, and are each independently hydrogen; deuterium; halogen; a cyano group; a sulfonate group; a hydroxyl group; an amine group; a nitro group; or the part that connects to Formula 1, provided that any one of the R19 to R22 is the part that connects to the nitrogen atom, to which Ar2 is not connected, among two nitrogen atoms of the Ar2-connected azo group of the two azo groups of Formula 1; and
in the Formula 5
R23 to R27 are the same as or different from each other, and are each independently hydrogen; deuterium; halogen; a cyano group; a sulfonate group; a hydroxyl group; an amine group; a nitro group; a substituted or unsubstituted C1 to C5 alkyl group; a substituted or unsubstituted C1 to C5 alkoxy group; or the part that connects to the nitrogen atom, to which Ar1 is not connected, among two nitrogen atoms of the Ar1-connected azo group of the two azo groups of Formula 1, provided that any one of the R23 to R27 is the part that connects to the nitrogen atom, to which Ar1 is not connected, among two nitrogen atoms of the Ar1-connected azo group of the two azo groups of Formula 1, and R28 to R32 are the same as or different from each other, and are each independently hydrogen; deuterium; halogen; a cyano group; a sulfonate group; a hydroxyl group; an amine group; a nitro group; a substituted or unsubstituted C1 to C5 alkyl group; a substituted or unsubstituted C1 to C5 alkoxy group; or the part that connects to the nitrogen atom, to which Ar2 is not connected, among two nitrogen atoms of the Ar2-connected azo group of the two azo groups of Formula 1, provided that any one of the R28 to R32 is the part that connects to the nitrogen atom, to which Ar2 is not connected, among two nitrogen atoms of the Ar2-connected azo group of the two azo groups of Formula 1, and
Z is a single bond; a substituted or unsubstituted C2 to C10 alkenylene group; or a substituted or unsubstituted C2 to C10 alkynylene group.

In one embodiment of the present invention, at least one of R15 to R18 in the Formula 4 may include at least a sulfonate group and a hydroxyl group, excluding the part that connects to the nitrogen atom, to which Ar1 is not connected, among two nitrogen atoms of the Ar1-connected azo group of the two azo groups of Formula 1, and at least one of R19 to R22 in the Formula 4 may include at least a sulfonate group and a hydroxyl group, excluding the part that connects to the nitrogen atom, to which Ar2 is not connected, among two nitrogen atoms of the Ar2-connected azo group of the two azo groups of Formula 1.

In one embodiment of the present invention, at least one of R23 to R27 in the Formula 5 may include at least one sulfonate group, excluding the part that connects to the nitrogen atom, to which Ar1 is not connected, among two nitrogen atoms of the Ar1-connected azo group of the two azo groups of Formula 1, and at least one of R28 to R32 in the Formula 5 may include at least one sulfonate group, excluding the part that connects to the nitrogen atom, to which Ar2 is not connected, among two nitrogen atoms of the Ar2-connected azo group of the two azo groups of Formula 1.

In one embodiment of the present invention, at least one of R23 to R27 in the Formula 5 may include at least a substituted or unsubstituted C1 to C3 alkyl group; or a substituted or unsubstituted C1 to C3 alkoxy group, excluding the part that connects to the nitrogen atom, to which Ar1 is not connected, among two nitrogen atoms of the Ar1-connected azo group of the two azo groups of Formula 1, and at least one of R28 to R32 in the Formula 5 may include at least a substituted or unsubstituted C1 to C3 alkyl group; or a substituted or unsubstituted C1 to C3 alkoxy group, excluding the part that connects to the nitrogen atom, to which Ar2 is not connected, among two nitrogen atoms of the Ar2-connected azo group of the two azo groups of Formula 1.

In one embodiment of the present invention, at least one of R23 to R27 in the Formula 5 may include at least a substituted or unsubstituted methyl group; or a substituted or unsubstituted methoxy group, excluding the part that connects to the nitrogen atom, to which Ar1 is not connected, among two nitrogen atoms of the Ar1-connected azo group of the two azo groups of Formula 1, and at least one of R28 to R32 in the Formula 5 may include at least a substituted or unsubstituted methyl group; or a substituted or unsubstituted methoxy group, excluding the part that connects to the nitrogen atom, to which Ar2 is not connected, among two nitrogen atoms of the Ar2-connected azo group of the two azo groups of Formula 1.

In one embodiment of the present invention, the second dispersant may comprise the compound represented by any one of Formula 1-1a to Formula 1-1d below. 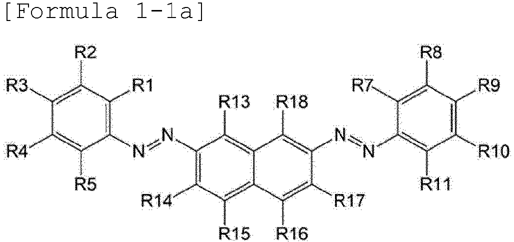 wherein,
R1 to R5, R7 to R11, and R13 to R18 are the same as or different from each other, and are each independently hydrogen; deuterium; halogen; a cyano group; a sulfonate group; a hydroxyl group; an amine group; or a nitro group; 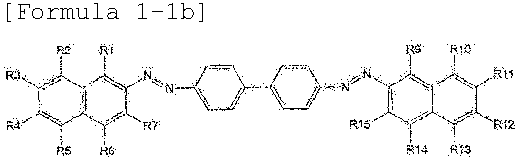
wherein,
R1 to R7 and R9 to R15 are the same as or different from each other and are each independently hydrogen; deuterium; halogen; a cyano group; a sulfonate group; a hydroxyl group; an amine group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; or a substituted or unsubstituted C6 to C20 aryl group, provided that at least one of R1 to R7 is a sulfonate group, and at least one of R9 to R15 is a sulfonate group; 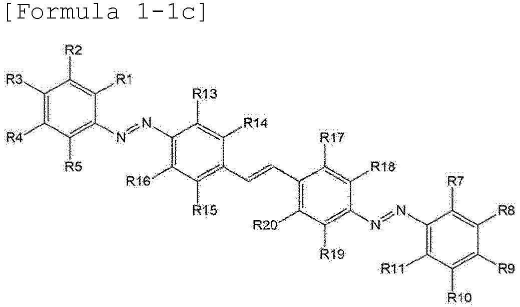
wherein,
R1 to R5 and R7 to R11 are the same as or different from each other, and are each independently hydrogen; deuterium; halogen; a cyano group; a sulfonate group; a hydroxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C6 to C20 aryl group; or a substituted or unsubstituted C2 to C20 heteroaryl group, provided that at least one of R1 to R5 is a hydroxyl group, and at least one of R7 to R11 is a hydroxyl group, and
R13 to R20 are the same as or different from each other, and are each independently hydrogen; deuterium; halogen; a cyano group; a sulfonate group; a hydroxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C6 to C20 aryl group; or a substituted or unsubstituted C2 to C20 heteroaryl group, provided that at least one of R13 to R16 is a sulfonate group, and at least one of R17 to R20 is a sulfonate group; 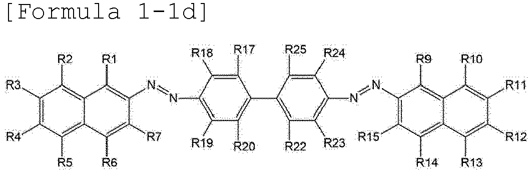
wherein,
R1 to R7 and R9 to R15 are the same as or different from each other and are each independently hydrogen; deuterium; halogen; a cyano group; a sulfonate group; a hydroxyl group; an amine group; or a nitro group, and
R17 to R20 and R22 to R25 are the same as or different from each other, and are each independently hydrogen; deuterium; halogen; a cyano group; a sulfonate group; a hydroxyl group; an amine group; a nitro group; a substituted or unsubstituted C1 to C5 alkyl group; or a substituted or unsubstituted C1 to C5 alkoxy group.

In one embodiment of the present invention, R1 to R5 and R7 to R11 in Formula 1-1a may be the same as or different from each other, and may be each independently hydrogen; halogen; a sulfonate group; or a hydroxyl group.

In one embodiment of the present invention, R13 to R18 in Formula 1-1a may be the same as or different from each other, and may be each independently hydrogen; a sulfonate group; or a hydroxyl group.

In one embodiment of the present invention, if the second dispersant is the compound represented by Formula 1-1a, it may comprise the compound (SulfoChlorophenol S) represented by Formula 6 below.

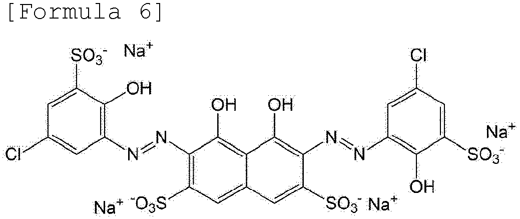

In the carbon nanotube dispersion according to one embodiment of the present invention, since the compound represented by Formula 1-1a included in the second dispersant contains at least one hydroxyl group, it forms a hydrogen bond with the solvent in the dispersion, thereby allowing the 'carbon nanotube-dispersant' complex to stably maintain a dispersed state in the solvent.

Also, in the carbon nanotube dispersion according to one embodiment of the present invention, since the compound represented by Formula 1-1a included in the second dispersant includes at least one sulfonate group, the dispersant is ionized when dissolved in a solvent, thereby forming an electrostatic repulsion between sulfonate anions to prevent agglomeration between adjacent dispersants and allowing the 'carbon nanotube-dispersant' complex to stably maintain a dispersed state in the solvent.

In one embodiment of the present invention, R1 to R7 in Formula 1-1b are the same or different from each other and are each independently hydrogen; a sulfonate group; or a hydroxyl group, provided that at least one of R1 to R7 may be a sulfonate group. In one embodiment of the present invention, R9 to R15 in Formula 1-1b are the same as or different from each other, and are each independently hydrogen; a sulfonate group; or a hydroxyl group, provided that at least one of R9 to R15 may be a sulfonate group.

In one embodiment of the present invention, if the second dispersant is a compound represented by Formula 1-1b, it may be at least one selected from the group consisting of direct red 28, direct red 2, direct red 7, direct red 46 and direct red 56, and it may not be limited to the above types as long as it is a substituted azo compound that can increase the dispersibility of carbon nanotubes while containing at least two sulfonate groups in the molecule.

In one embodiment of the present invention, if the second dispersant is the compound represented by Formula 1-1b, it may further contain at least two amine groups.

If the second dispersant is a compound represented by Formula 1-1b, since it further contains at least two amine groups, it forms a hydrogen bond with the solvent so that the 'carbon nanotube-dispersant' complex can stably maintain a dispersed state in the solvent, and since an interaction by hydrogen bond between the nitrogen atom contained in the first dispersant and the amine group of the second dispersant is appropriately balanced, the effects of reducing the viscosity of the carbon nanotube dispersion and suppressing the increase in viscosity due to changes over time can be further improved.

In one embodiment of the present invention, R1 to R5 in Formula 1-1c are the same as or different from each other and are each independently hydrogen; or a hydroxyl group, provided that at least one of R1 to R5 may be a hydroxyl group.

In one embodiment of the present invention, R7 to R11 in the Formula 1-1c are the same as or different from each other, and are each independently hydrogen; or a hydroxyl group, provided that at least one of R7 to R11 may be a hydroxyl group.

In one embodiment of the present invention, R13 to R16 in the Formula 1-1c are the same as or different from each other, and are each independently hydrogen; or a sulfonate group, provided that at least one of R13 to R16 may be a sulfonate group.

In one embodiment of the present invention, R17 to R20 in the Formula 1-1c are the same as or different from each other, and are each independently hydrogen; or a sulfonate group, provided that at least one or more of R17 to R20 may be a sulfonate group.

In one embodiment of the present invention, if the second dispersant is a compound represented by Formula 1-1c, a specific example thereof may include Direct Yellow 4 as in Formula 7 below, and it may not be limited to the above types as long as it is a substituted azo compound that can increase the dispersibility of carbon nanotubes while containing at least two sulfonate groups and at least two hydroxyl groups in the molecule.

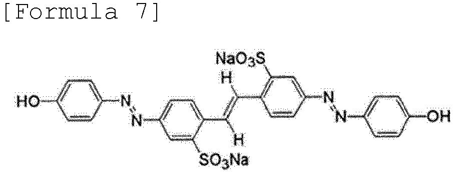

In one embodiment of the present invention, R1 to R7 in the Formula 1-1d are the same as or different from each other, and are each independently hydrogen; a sulfonate group; a hydroxyl group; or an amine group, provided that the R1 to R7 may comprise at least one hydroxyl group and at least two sulfonate groups.

In one embodiment of the present invention, R9 to R15 in the Formula 1-1d are the same as or different from each other, and are each independently hydrogen; a sulfonate group; a hydroxyl group; or an amine group, provided that the R9 to R15 may comprise at least one hydroxyl group and at least two sulfonate groups.

In one embodiment of the present invention, R17 to R20 in the Formula 1-1d may be the same as or different from each other, and may be each independently hydrogen; or a substituted or unsubstituted C1 to C5 alkyl group.

In one embodiment of the present invention, R22 to R25 in the Formula 1-1d may be the same as or different from each other, and may be each independently hydrogen; or a substituted or unsubstituted C1 to C5 alkyl group.

In one embodiment of the present invention, if the second dispersant is the compound represented by Formula 1-1d, it may be at least one selected from the group consisting of Direct Blue 1, Direct Blue 14, Direct Blue 15, and Direct Blue 53.

In the carbon nanotube dispersion according to one embodiment of the present invention, since the compound represented by Formula 1-1d included in the second dispersant contains at least one hydroxyl group, it forms a hydrogen bond with the solvent in the dispersion, thereby allowing the 'carbon nanotube-dispersant' complex to stably maintain a dispersed state in the solvent.

Also, in the carbon nanotube dispersion according to one embodiment of the present invention, since the compound represented by Formula 1-1d included in the second dispersant includes at least two sulfonate groups, the dispersant is ionized when dissolved in a solvent, thereby forming an electrostatic repulsion between sulfonate anions to prevent agglomeration between adjacent dispersants and allowing the 'carbon nanotube-dispersant' complex to stably maintain a dispersed state in the solvent.

If the carbon nanotube dispersion does not contain the second dispersant according to the present invention, the area of the surface of the carbon nanotubes that is not sufficiently covered by the dispersant may be increased, and as a result, a strong bonding force greater than an appropriate level can be generated between carbon nanotubes, and as a result of agglomeration between carbon nanotubes, the viscosity of the dispersion can be formed high.

In addition, if the second dispersant contains, for example, three or more aromatic rings in the molecular structure, since the molecules are linearly angled or form a dense structure, it is unfavorable for surface adsorption of carbon nanotubes with small diameter, especially single-walled carbon nanotubes. In addition, since a π-π interaction between non-adsorbed dispersants is strong and intensifies the agglomeration of the dispersants, the viscosity of the dispersion is formed high, and the viscosity of the dispersion can be significantly increased over time.

In one embodiment of the present invention, the second dispersant may be contained in an amount of 0.001 to 9 parts by weight based on 100 parts by weight of the carbon nanotube dispersion, and for example, may be contained in an amount of 0.001 parts by weight or more, 0.01 parts by weight or more, 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, 1 parts by weight or more, 1.1 parts by weight or more, 1.2 parts by weight or more, 1.3 parts by weight or more, 1.4 parts by weight or more, 1.5 parts by weight or more, 1.6 parts by weight or more, 1.7 parts by weight or more, 1.8 parts by weight or more, 1.9 parts by weight or more, 2 parts by weight or more, 2.1 parts by weight or more, 2.2 parts by weight or more, 2.3 parts by weight or more, 2.4 parts by weight or more, 2.5 parts by weight or more, 2.6 parts by weight or more, 2.7 parts by weight or more, 2.8 parts by weight or more, 2.9 parts by weight or more, 3 parts by weight or more, 3.1 parts by weight or more, 3.2 parts by weight or more, 3.3 parts by weight or more, 3.4 parts by weight or more, 3.5 parts by weight or more, 3.6 parts by weight or more, 3.7 parts by weight or more, 3.8 parts by weight or more, 3.9 parts by weight or more, 4 parts by weight or more, 4.1 parts by weight or more, 4.2 parts by weight or more, 4.3 parts by weight or more, 4.4 parts by weight or more or 4.5 parts by weight or more, and may be contained in an amount of 9 parts by weight or less, 8.9 parts by weight or less, 8.8 parts by weight or less, 8.7 parts by weight or less, 8.6 parts by weight or less, 8.5 parts by weight or less, 8.4 parts by weight or less, 8.3 parts by weight or less, 8.2 parts by weight or less, 8.1 parts by weight or less, 8 parts by weight or less, 7.9 parts by weight or less, 7.8 parts by weight or less, 7.7 parts by weight or less, 7.6 parts by weight or less, 7.5 parts by weight or less, 7.4 parts by weight or less, 7.3 parts by weight or less, 7.2 parts by weight or less, 7.1 parts by weight or less, 7 parts by weight or less, 6.9 parts by weight or less, 6.8 parts by weight or less, 6.7 parts by weight or less, 6.6 parts by weight or less, 6.5 parts by weight or less, 6.4 parts by weight or less, 6.3 parts by weight or less, 6.2 parts by weight or less, 6.1 parts by weight or less, 6 parts by weight or less, 5.9 parts by weight or less, 5.8 parts by weight or less, 5.7 parts by weight or less, 5.6 parts by weight or less, 5.5 parts by weight or less, 5.4 parts by weight or less, 5.3 parts by weight or less, 5.2 parts by weight or less, 5.1 parts by weight or less, 5 parts by weight or less, 4.9 parts by weight or less, 4.8 parts by weight or less, 4.7 parts by weight or less or 4.6 parts by weight or less.

If the content of the second dispersant is less than 0.001 parts by weight based on 100 parts by weight of the carbon nanotube dispersion, there may be a problem that since an effective dispersion effect is not achieved, the viscosity of the dispersion may not be formed low, and the viscosity is increased over time. If the content of the second dispersant exceeds 9 parts by weight, there may be a problem that as the content of the second dispersant is excessive, agglomeration occurs between solid components within the dispersion, thereby increasing the viscosity of the dispersion.

In one embodiment of the present invention, the first dispersant and the second dispersant in the carbon nanotube dispersion can be contained in a weight ratio of 100:10 to 100:90, and for example, the ratio of the first dispersant to the second dispersant may be 100:10 or more, 100:15 or more, 100:17.65 or more, 100:20 or more, 100:25 or more, 100:30 or more, 100:33.33 or more, 100:35 or more, 100:40 or more, 100:45 or more, 100:50 or more or 100:55 or more, and the ratio of the first dispersant to the second dispersant may be 100:90 or less, 100:85 or less, 100:80 or less, 100:75 or less, 100:70 or less, 100:65 or less or 100:60 or less.

If the contents of the first dispersant and the second dispersant are included in the carbon nanotube dispersion at the above weight ratio, the carbon nanotubes are uniformly dispersed within the carbon nanotube dispersion, and thus the viscosity can be maintained at a constant level over time with low viscosity.

### (3) Solvent

The solvent of the carbon nanotube dispersion according to one embodiment of the present invention is a dispersion medium for dispersing the carbon nanotubes, the first dispersant, and the second dispersant, and is used to predisperse the carbon nanotubes in a powder state and supply them as a carbon nanotube dispersion in order to prevent agglomeration that occurs when the carbon nanotubes in a powder state are directly used to prepare an electrode slurry composition.

The solvent can dissolve or disperse the carbon nanotubes, the first dispersant, and the second dispersant to a certain level or higher. The aqueous solvent may be, for example, water, and the aqueous solvent may be contained in an amount such that the electrode slurry composition can have an appropriate viscosity, taking into consideration of the coating properties of the electrode slurry composition prepared later using the carbon nanotube dispersion.

The carbon nanotube dispersion according to one embodiment of the present invention enables the first dispersant and the second dispersant to uniformly disperse carbon nanotubes in a solvent as described above, and thus may reduce the average particle size distribution of dispersed particles contained in the dispersion, for example, a complex of carbon nanotubes and each dispersant.

The average particle size distribution (D₅₀) of the dispersed particles contained in the dispersion may be, for example, 0.5 to 10 *µ*m, 1 to 10 *µ*m, 1 to 8 *µ*m, and preferably 1 to 5 *µ*m.

The carbon nanotube dispersion of the present invention containing the above components has excellent dispersibility, and thus the viscosity of the dispersion is low and the degree of increase in viscosity over time is small.

The carbon nanotube dispersion may have an initial viscosity of 1 to 8 Pa.s as measured at 25 °C and 1 rpm using a viscometer (viscometer TV-25, Rotor Code 01, manufactured by TOKI SANGYO company), and for example, may be 1 Pa·s or more, 1.1 Pa·s or more, 1.2 Pa·s or more, 1.3 Pa·s or more, 1.4 Pa·s or more, 1.5 Pa·s or more, 1.6 Pa·s or more, 1.7 Pa·s or more, 1.8 Pa·s or more, 1.9 Pa·s or more, 2 Pa·s or more, 2.1 Pa·s or more, 2.2 Pa·s or more, 2.3 Pa·s or more, 2.4 Pa·s or more, 2.5 Pa·s or more, 2.6 Pa·s or more, 2.7 Pa·s or more, 2.8 Pa·s or more, 2.9 Pa·s or more, 3 Pa·s or more, 3.1 Pa·s or more, 3.2 Pa·s or more, 3.3 Pa·s or more, 3.4 Pa·s or more, 3.5 Pa·s or more, 3.6 Pa·s or more, 3.7 Pa·s or more, 3.8 Pa·s or more, 3.9 Pa·s or more, 4 Pa·s or more, 4.1 Pa·s or more, 4.2 Pa·s or more, 4.3 Pa·s or more, 4.4 Pa·s, 4.5 Pa·s or more, 4.6 Pa·s or more, 4.7 Pa·s or more, 4.8 Pa·s or more, 4.9 Pa·s or more, 5 Pa·s or more, 5.1 Pa·s or more, 5.2 Pa·s or more, 5.3 Pa·s or more, 5.4 Pa·s or more or 5.5 Pa·s or more, and may be 10 Pa·s or less, 9.9 Pa·s or less, 9.8 Pa·s or less, 9.7 Pa·s or less, 9.6 Pa·s or less, 9.5 Pa·s or less, 9.4 Pa·s or less, 9.3 Pa·s or less, 9.2 Pa·s or less, 9.1 Pa·s or less, 9 Pa·s or less, 8.9 Pa·s or less, 8.8 Pa·s or less, 8.7 Pa·s or less, 8.6 Pa·s or less, 8.5 Pa·s or less, 8.4 Pa·s or less, 8.3 Pa·s or less, 8.2 Pa·s or less, 8.1 Pa·s or less, 8 Pa·s or less, 7.9 Pa·s or less, 7.8 Pa·s or less, 7.7 Pa·s or less, 7.6 Pa·s or less, 7.5 Pa·s or less, 7.4 Pa·s or less, 7.3 Pa·s or less, 7.2 Pa·s or less, 7.1 Pa·s or less, 7 Pa·s or less, 6.9 Pa·s or less, 6.8 Pa·s or less, 6.7 Pa·s or less, 6.6 Pa·s or less, 6.5 Pa·s or less, 6.4 Pa·s or less, 6.3 Pa·s or less, 6.2 Pa·s or less, 6.1 Pa·s or less, 6 Pa·s or less, 5.9 Pa·s or less, 5.8 Pa·s or less, 5.7 Pa·s or less or 5.6 Pa·s or less. If the carbon nanotube dispersion has an initial viscosity within the above range, electrode slurry can be manufactured more smoothly using it, and electrode slurry comprising the carbon nanotube dispersion can have an appropriate viscosity for forming an electrode.

In addition, the carbon nanotube dispersion may have a viscosity increase rate of 0.1% to 15 % or less calculated by Equation 1 below when left at 25 °C for one week, and specifically, may have a viscosity increase rate of 15 % or less, 14.5 % or less, 14 % or less, 13.5 % or less, 13 % or less, 12.5 % or less, 12.3 % or less, 12 % or less, 11.5 % or less, 11 % or less, 10.5 % or less, 10 % or less, 9.5 % or less, 9 % or less, 8.5 % or less, 8 % or less, 7.5 % or less, 7 % or less, 6.8 % or less, 6.5 % or less, 6.1 % or less, 6 % or less, 5.5 % or less, 5 % or less, 4.5 % or less, 4 % or less, 3.5 % or less, 3 % or less, 2.5 % or less, 2.4 % or less, 2 % or less, 1.5 % or less or 1 % or less. Viscosity increase rate (%) = {(viscosity measured after leaving for 1 week at 25°C - initial viscosity)/initial viscosity} × 100

At this time, the viscosity after leaving for 1 week and initial viscosity were measured at 25 °C and 1 rpm.

### Preparation method of carbon nanotube dispersion

Hereinafter, a method for preparing the carbon nanotube dispersion according to one embodiment of the present invention will be described.

The method for preparing the carbon nanotube dispersion according to the present invention includes the steps of (1) preparing a primary dispersion of carbon nanotubes by mixing carbon nanotubes, a first dispersant containing nitrogen atoms, a second dispersant containing the compound represented by Formula 1 below and a solvent; and (2) dispersing the primary dispersion of carbon nanotubes to prepare a secondary dispersion of carbon nanotubes. 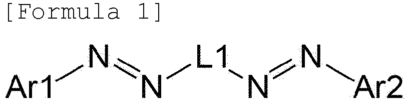 wherein,
Ar1 and Ar2 are each independently a substituted or unsubstituted C6 to C30 aryl group, and L1 is a substituted or unsubstituted C6 to C30 arylene group.

In step (1), carbon nanotubes, the first dispersant containing nitrogen atoms, the second dispersant containing the compound represented by Formula 1 and a solvent are mixed to prepare the primary dispersion of carbon nanotubes. The step of preparing the primary dispersion of the carbon nanotubes is carried out through a wetting process in which each component is evenly mixed.

Since the specific description of the carbon nanotubes, the first dispersant containing nitrogen atoms, the second dispersant containing the compound represented by Formula 1 and the solvent according to the preparation method of the carbon nanotube dispersion is the same as described above, the specific description will be omitted below.

The mixing for preparing the primary dispersion of the carbon nanotubes can be performed using a conventional mixing method, specifically, a mixing device such as a pony mixer, a change-can mixer, a Hobert mixer, a planetary mixer, a butterfly mixer, a stone mill, a homogenizer, a bead mill, a ball mill, a basket mill, an attrition mill, a universal stirrer, a clear mixer or a TK mixer, and may include a step of mixing at a rotation speed of 300 to 5,000 rpm for 30 minutes to 7 hours.

In addition, when mixing to prepare the primary dispersion of the carbon nanotubes, cavitation dispersion treatment may be also performed to increase the miscibility of the carbon nanotubes and the solvent, or the dispersibility of the carbon nanotubes in the solvent. The cavitation dispersion treatment is a dispersion treatment method that utilizes impact waves generated by the explosion of vacuum bubbles formed in water when high energy is applied to the liquid, and carbon nanotubes can be dispersed without damaging their properties by such a dispersion treatment method. Specifically, the cavitation dispersion treatment can be performed by ultrasonic waves, jet mill, or shear dispersion treatment.

The step of preparing the primary dispersion of carbon nanotubes can be performed under temperature conditions in which the physical properties of the mixture, including viscosity, do not change due to evaporation of the solvent. For example, it can be performed at a temperature of 50 °C or less, more specifically, 5 °C to 50 °C.

In step (2), the primary dispersion of the carbon nanotubes is dispersed to prepare a secondary dispersion of carbon nanotubes.

The process of preparing the secondary dispersion of carbon nanotubes can be performed by a method such as a ball mill, a bead mill, a disc mill or a basket mill, a high-pressure disperser (high pressure homogenizer), and more specifically, it can be performed by a dispersion method using a high-pressure disperser (high pressure homogenizer).

The dispersion by the high-pressure disperser is achieved by, for example, pressurizing the mixture with a plunger pump of the high-pressure disperser and pushing it out through the gap of the dispersion valve, and thereby causing forces such as cavitation, shear, impact and explosion when passing through the gap.

The dispersion process can be performed depending on the degree of dispersion of the carbon nanotube dispersion, and specifically, can be performed under a pressure of 5,000 to 30,000 psi for 30 to 120 minutes, more specifically, 60 to 90 minutes, and the above process can be repeated 1 to 10 times.

The carbon nanotube dispersion according to the present invention may mean the secondary dispersion of the carbon nanotubes.

### Electrode slurry composition for lithium secondary battery

In addition, the present invention provides an electrode slurry composition for a lithium secondary battery comprising the carbon nanotube dispersion and an electrode active material.

The electrode slurry composition for the lithium secondary battery may be a positive electrode slurry composition or a negative electrode slurry composition, and specifically, may be a negative electrode slurry composition.

The electrode slurry composition for the lithium secondary battery may comprise the carbon nanotube dispersion, a positive electrode active material or a negative electrode active material as an electrode active material, a binder, and a solvent and/or other additives as needed.

As the positive electrode active material, positive electrode active materials well known in the art can be used without limitation, and for example, lithium cobalt-based oxide, lithium nickel-based oxide, lithium manganese-based oxide, lithium iron phosphorus oxide, lithium nickel manganese cobalt-based oxide or a combination thereof, etc. may be used. Specifically, LiCoO₂, LiNiO₂, LiMn₂O₄, LiCoPO₄, LiFePO₄ and LiNiaMnbCocO₂ (wherein, 0 < a, b, c < 1) can be used as the positive electrode active material, but is not limited thereto.

The negative electrode active material may comprise one or more negative electrode active materials selected from the group consisting of natural graphite, artificial graphite, carbonaceous material; lithium-containing titanium composite oxide (LTO), metals (Me) of Si, Sn, Li, Zn, Mg, Cd, Ce, Ni or Fe; alloys composed of the metals (Me); oxides (MeOₓ) of the metals (Me); and a composite of the metals (Me) and carbon. The negative electrode active material may be contained in an amount of 60 to 98 % by weight, more preferably 70 to 98 % by weight, based on the total weight of solids excluding the solvent in the negative electrode slurry.

The binder is a component that assists in the bonding of the active material and the electrically conductive material and the bonding to the current collector, and is typically added in an amount of 1 to 30 % by weight based on the total weight of the mixture comprising the electrode active material. Examples of such binders may comprise polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluorine rubber, various copolymers, etc.

The solvent may comprise organic solvents such as N-methyl pyrrolidone (NMP), dimethyl formamide (DMF), acetone, dimethyl acetamide, etc., or water, and these solvents may be used alone or in a mixture of two or more. The amount of solvent used is sufficient if it can dissolve and disperse the electrode active material, the binder, and the electrically conductive material by taking into account the coating thickness of the slurry and the preparation yield.

The viscosity modifier may be carboxymethyl cellulose, polyacrylic acid, or the like, and the viscosity of the electrode slurry may be adjusted by addition thereof to facilitate the preparation of the electrode slurry and the application process on the electrode current collector.

The filler is optionally used as a component that suppresses the expansion of the electrode, and is not particularly limited as long as it is a fibrous material that does not cause chemical changes to the battery, and for example, olefin polymers such as polyethylene and polypropylene; fibrous materials such as glass fiber and carbon fiber are used.

If the electrode slurry composition is a composition of positive electrode slurry for forming a positive electrode, the composition of the positive electrode slurry can be applied onto a positive electrode current collector, and then dried and rolled to manufacture the positive electrode. Alternatively, it may also be manufactured by casting the positive electrode slurry on a separate support, peeling it off from the support to obtain a film, and laminating it on the positive electrode current collector.

The thickness of the positive electrode active material layer formed by the positive electrode slurry may vary depending on the loading amount, loading speed, etc. for applying the positive electrode slurry.

The positive electrode current collector generally has a thickness of 3 *µ*m to 500 *µ*m. The positive electrode current collector is not particularly limited as long as it has high electrical conductivity without causing chemical changes in the relevant battery. For example, stainless steel, aluminum, nickel, titanium, sintered carbon, or aluminum or stainless steel whose surface is treated with carbon, nickel, titanium, silver or the like may be used. In addition, the positive electrode current collector can have minute irregularities formed on its surface to enhance the bonding force with the positive electrode active material, and may be formed in various forms such as film, sheet, foil, net, porous body, foam, nonwoven fabric or the like.

If the electrode slurry composition is a composition of negative electrode slurry for forming a negative electrode, the negative electrode can be manufactured by applying the composition of the negative electrode slurry onto a negative electrode current collector, followed by drying and rolling. Alternatively, it may also be manufactured by casting the negative electrode slurry on a separate support, peeling it off from the support to obtain a film, and laminating it on the negative electrode current collector.

The thickness of the negative electrode active material layer formed by the negative electrode slurry may vary depending on the loading amount, loading speed, etc. for applying the negative electrode slurry.

The negative electrode current collector generally has a thickness of 3 *µ*m to 500 *µ*m. This negative electrode current collector is not particularly limited as long as it has high electrical conductivity without causing chemical changes in the relevant battery. For example, copper, stainless steel, aluminum, nickel, titanium, sintered carbon, or copper or stainless steel whose surface is treated with carbon, nickel, titanium, silver or the like, or aluminum-cadmium alloy may be used. In addition, as with the positive electrode current collector, the negative electrode current collector can have minute irregularities formed on its surface to enhance the bonding force with the negative electrode active material, and may be formed in various forms such as film, sheet, foil, net, porous body, foam, nonwoven fabric or the like.

### Lithium secondary battery

The lithium secondary battery comprises a positive electrode, a negative electrode, a separator interposed between the positive electrode and the negative electrode, and an electrolyte solution. Since the positive electrode and negative electrode are the same as those described above, their detailed description is omitted.

The separator separates the negative electrode and the positive electrode and provides a passage for lithium ions to move. The separator can be used without any particular limitation as long as it is usually used as a separator in a lithium secondary battery. As the separator, it is particularly preferable to have low resistance to ion movement of the electrolyte and excellent electrolyte solution impregnation ability. Specifically, a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, etc. or a laminated structure of two or more layers thereof may be used. In addition, a conventional porous nonwoven fabric, for example, a nonwoven fabric made of high melting point glass fiber, polyethylene terephthalate fiber, etc. may also be used. In addition, a coated separator containing a ceramic component or a polymer material may be used to secure heat resistance or mechanical strength, and the separator may be selectively used in a single-layer or multi-layer structure.

The electrolyte may comprise, but is not limited to, an organic liquid electrolyte, an inorganic liquid electrolyte, a solid polymer electrolyte, a gel-type polymer electrolyte, a solid inorganic electrolyte, and a molten-type inorganic electrolyte, which can be used in the manufacture of a lithium secondary battery. Specifically, the electrolyte may comprise an organic solvent and a lithium salt.

The organic solvent may be used without any particular limitation as long as it can serve as a medium through which ions involved in the electrochemical reaction of the battery can move. Specifically, the organic solvent may be an esterbased solvent such as methyl acetate, ethyl acetate, γ-butyrolactone, or ε-caprolactone; an ether-based solvents such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; nitriles such as R-CN(R is a C2 to C20 linear, branched or cyclic hydrocarbon group, and may include a double bond aromatic ring or an ether bond); amides such as dimethylformamide; dioxolanes such as 1,3-dioxolane; or sulfolanes. Among them, the carbonate-based solvent is preferable, and a mixture of the cyclic carbonate having high ionic conductivity and high dielectric constant that can increase the charge/discharge performance of the battery (e.g., ethylene carbonate or propylene carbonate, etc.) and the linear carbonate-based compound having a low viscosity (e.g., ethylmethyl carbonate, dimethyl carbonate or diethyl carbonate, etc.) is more preferred. In this case, when the cyclic carbonate and the chain carbonate are mixed in a volume ratio of about 1:1 to about 1:9, the performance of the electrolyte may be excellent.

The lithium salt may be used without particular limitation as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂. The concentration of the lithium salt is preferably used within the range of 0.1 to 2.0M. If the concentration of the lithium salt is in the above range, since the electrolyte has appropriate conductivity and viscosity, excellent electrolyte performance can be exhibited, and lithium ions can move effectively.

In the electrolyte, in addition to the electrolyte components described above, for the purpose of improving the lifetime characteristics of the battery, suppressing the decrease in the capacity of the battery, and improving the discharging capacity of the battery, for example, one or more additives such as haloalkylene carbonate-based compounds such as difluoroethylene carbonate, pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol or aluminum trichloride may be further comprised. In this case, the additive may be contained in an amount of 0.1 to 5% by weight based on the total weight of the electrolyte.

The lithium secondary battery comprising the electrode manufactured using the carbon nanotube dispersion according to the present invention, specifically, the lithium secondary battery comprising the negative electrode manufactured using the carbon nanotube dispersion, can stably exhibit excellent discharging capacity and output characteristics because carbon nanotubes are uniformly dispersed within the negative electrode and the content thereof can be reduced compared to cases where electrically conductive materials such as conventional carbon black are included. As a result, it is useful in the field of portable devices such as cellular phones, notebook computers, and digital cameras, and electric vehicles such as a hybrid electric vehicle (HEV).

Accordingly, according to another embodiment of the present invention, a battery module comprising the lithium secondary battery as a unit cell and a battery pack comprising the same may be provided.

The battery module or battery pack may be used as a power source for any one or more medium- and large-sized devices of a power tool; an electric vehicle comprising an electric vehicle (EV), a hybrid electric vehicle, and a plug-in hybrid electric vehicle (PHEV); or a power storage system, etc.

### Mode for Invention

Hereinafter, specific examples of the present invention are presented. However, the examples described below are only for specifically illustrating or explaining the present invention, and the present invention is not limited thereto. In addition, since the contents not described herein can be sufficiently technically inferred by those skilled in the art, their explanation is omitted.

### Examples

### Example la

(1) 5.625 g (1.125 parts by weight relative to a total of 100 parts by weight of the carbon nanotube dispersion) of polyvinylpyrrolidone (PVP) (PVP K15, prepared by Zhangzhou Huafu Chemical company) as a first dispersant containing nitrogen atoms, 1.875 g (0.375 parts by weight relative to a total of 100 parts by weight of the carbon nanotube dispersion) of Sulfochlorophenol S sodium calcium salt (prepared by Sigma Aldrich company) as a second dispersant comprising the compound represented by Formula 1, and 487.5 g of water as a solvent were mixed to prepare 495 g of a mixed solution, and the mixed solution was put into a dissolution tank (dissolver, Dispermat-CA, prepared by VMA-GETZMANN company) equipped with an impeller and a container, and mixed by stirring at 400 rpm for 10 minutes.
(2) To the above mixture, 5.0 g (1.0 part by weight relative to a total of 100 parts by weight of the carbon nanotube dispersion) of single-walled carbon nanotubes (SWCNT, TUBALL, prepared by OCSiAl company) having a specific surface area of 1,160 m²/g and an average particle size (D₅₀) of 5 *µ*m were additionally added, and the mixture was stirred at 8,000 rpm for 60 minutes to prepare a total of 500 g of a primary dispersion of carbon nanotubes.
(3) The primary dispersion of the carbon nanotubes was homogeneously dispersed 7 times at a pressure of 20,000 psi using a high-pressure disperser (PICOMAX, manufactured by Micronox company) to prepare a secondary dispersion of carbon nanotubes.

### Example 2a

A carbon nanotube dispersion was prepared in the same manner as in the Example 1a, except that in the above Example 1a, the content of the first dispersant is 5.0 g (1.0 part by weight relative to a total of 100 parts by weight of the carbon nanotube dispersion), and the content of the second dispersant is 2.5 g (0.5 parts by weight relative to a total of 100 parts by weight of the carbon nanotube dispersion).

### Example 3a

A carbon nanotube dispersion was prepared in the same manner as in the Example 1a, except that in the above Example 1a, the content of the first dispersant is 3.375 g (0.675 part by weight relative to a total of 100 parts by weight of the carbon nanotube dispersion), the content of the second dispersant is 1.125 g (0.225 parts by weight relative to a total of 100 parts by weight of the carbon nanotube dispersion), and the content of carbon nanotubes is 3.0 g (0.6 parts by weight relative to a total of 100 parts by weight of the carbon nanotube dispersion).

### Example 1b

(1) 4.5 g (0.9 parts by weight relative to a total of 100 parts by weight of the carbon nanotube dispersion) of polyvinylpyrrolidone (PVP) (PVP K15, prepared by Zhangzhou Huafu Chemical company) as a first dispersant, which is a polymer dispersant containing nitrogen atoms, 1.5 g (0.3 parts by weight relative to a total of 100 parts by weight of the carbon nanotube dispersion) of Direct Red 28 (prepared by Sigma Aldrich company) as a second dispersant comprising a compound containing at least two azo groups and two or more sulfonate groups, and 490 g of water as a solvent were mixed to prepare 496 g of a mixed solution, and the mixed solution was put into a dissolution tank (dissolver, Dispermat-CA, manufactured by VMA-GETZMANN company) equipped with an impeller and a container, and mixed by stirring at 400 rpm for 10 minutes.
(2) To the above mixture, 4.0 g (0.8 parts by weight relative to a total of 100 parts by weight of the carbon nanotube dispersion) of single-walled carbon nanotubes (SWCNT, TUBALL, prepared by OCSiAl company) having a specific surface area of 1,160 m²/g and an average particle size (D₅₀) of 5 *µ*m were additionally added, and the mixture was stirred at 8,000 rpm for 60 minutes to prepare a total of 500 g of a primary dispersion of carbon nanotubes.
(3) The primary dispersion of the carbon nanotubes was homogeneously dispersed 7 times at a pressure of 14,000 psi using a high-pressure disperser (PICOMAX, manufactured by Micronox company) to prepare a dispersion of carbon nanotubes.

### Example 2b

A carbon nanotube dispersion was prepared in the same manner as in the Example 1b, except that in the above Example 1b, the content of carbon nanotubes is 1.0 parts by weight relative to a total of 100 parts by weight of the carbon nanotube dispersion, the content of the first dispersant is 1.125 parts by weight relative to a total of 100 parts by weight of the carbon nanotube dispersion, and the content of the second dispersant is 0.375 parts by weight relative to a total of 100 parts by weight of the carbon nanotube dispersion.

### Example 3b

A carbon nanotube dispersion was prepared in the same manner as in the Example 1b, except that in the above Example 1b, the content of carbon nanotubes is 1.0 parts by weight relative to a total of 100 parts by weight of the carbon nanotube dispersion, the content of the first dispersant is 1.12 parts by weight relative to a total of 100 parts by weight of the carbon nanotube dispersion, and the content of the second dispersant is 0.3 parts by weight relative to a total of 100 parts by weight of the carbon nanotube dispersion.

### Example 4b

A carbon nanotube dispersion was prepared in the same manner as in the Example 1b, except that in the above Example 1b, the content of carbon nanotubes is 1.0 part by weight relative to a total of 100 parts by weight of the carbon nanotube dispersion, the content of the first dispersant is 1.0 part by weight relative to a total of 100 parts by weight of the carbon nanotube dispersion, and the content of the second dispersant is 0.5 parts by weight relative to a total of 100 parts by weight of the carbon nanotube dispersion.

### Example 5b

A carbon nanotube dispersion was prepared in the same manner as in the Example 1b, except that in the above Example 1b, 1.5 g (0.3 parts by weight relative to a total of 100 parts by weight of the carbon nanotube dispersion) of Direct Red 7 (prepared by Sigma Aldrich company) was used instead of Direct Red 28.

### Example 1c

(1) 4.5 g (0.9 parts by weight relative to a total of 100 parts by weight of the carbon nanotube dispersion) of polyvinylpyrrolidone K15 (PVP K15, prepared by Zhangzhou Huafu Chemical company) as a first dispersant, which is a polymer dispersant containing nitrogen atoms, 1.5 g(0.3 parts by weight relative to a total of 100 parts by weight of the carbon nanotube dispersion) of Direct Yellow 4 (prepared by Sigma Aldrich company) as a second dispersant comprising a compound containing at least two azo groups, two or more sulfonate groups and two or more hydroxyl groups, and 490 g of water as a solvent were mixed to prepare 496 g of a mixed solution, and the mixed solution was put into a dissolution tank (dissolver, Dispermat-CA, manufactured by VMA-GETZMANN company) equipped with an impeller and a container, and mixed by stirring at 400 rpm for 10 minutes.
   To the above mixture, 4.0 g (0.8 parts by weight relative to a total of 100 parts by weight of the carbon nanotube dispersion) of single-walled carbon nanotubes (SWCNT, TUBALL, prepared by OCSiAl company) having a specific surface area of 1,160 m²/g and an average particle size (D₅₀) of 5 *µ*m were additionally added, and the mixture was stirred at 8,000 rpm for 60 minutes to prepare a total of 500 g of a primary dispersion of carbon nanotubes.
(2) The primary dispersion of carbon nanotubes was homogeneously dispersed 7 times at a pressure of 14,000 psi using a high-pressure disperser (PICOMAX, manufactured by Micronox company) to prepare a dispersion of carbon nanotubes.

### Example 2c

A carbon nanotube dispersion was prepared in the same manner as in the Example 1c, except that in the above Example 1c, the content of the first dispersant is 0.96 parts by weight relative to a total of 100 parts by weight of the carbon nanotube dispersion, and the content of the second dispersant is 0.24 parts by weight relative to a total of 100 parts by weight of the carbon nanotube dispersion.

### Example 3c

A carbon nanotube dispersion was prepared in the same manner as in the Example 1c, except that in the above Example 1c, the content of the first dispersant is 0.8 parts by weight relative to a total of 100 parts by weight of the carbon nanotube dispersion, and the content of the second dispersant is 0.4 parts by weight relative to a total of 100 parts by weight of the carbon nanotube dispersion.

### Example 4c

A carbon nanotube dispersion was prepared in the same manner as in the Example 1c, except that in the above Example 1c, the content of the first dispersant is 1.0 part by weight relative to a total of 100 parts by weight of the carbon nanotube dispersion, and the content of the second dispersant is 0.8 parts by weight relative to a total of 100 parts by weight of the carbon nanotube dispersion.

### Example 5c

A carbon nanotube dispersion was prepared in the same manner as in the Example 1c, except that in the above Example 1c, the content of the first dispersant is 2.4 parts by weight relative to a total of 100 parts by weight of the carbon nanotube dispersion, and the content of the second dispersant is 1.2 parts by weight relative to a total of 100 parts by weight of the carbon nanotube dispersion.

### Example 1d

(1) 4.5 g (0.9 parts by weight relative to a total of 100 parts by weight of the carbon nanotube dispersion) of polyvinylpyrrolidone (PVP K15, prepared by Zhangzhou Huafu Chemical company) as a first dispersant containing nitrogen atoms, 1.5 g (0.3 parts by weight relative to a total of 100 parts by weight of the carbon nanotube dispersion) of Direct Blue 53 (prepared by Sigma Aldrich company) as a second dispersant comprising the compound represented by Formula 1, and 490 g of water as a solvent were mixed to prepare 496 g of a mixed solution, and the mixed solution was put into a dissolution tank (dissolver, Dispermat-CA, manufactured by VMA-GETZMANN company) equipped with an impeller and a container, and mixed by stirring at 400 rpm for 10 minutes.

To the above mixture, 4.0 g (0.8 parts by weight relative to a total of 100 parts by weight of the carbon nanotube dispersion) of single-walled carbon nanotubes (SWCNT, TUBALL, prepared by OCSiAl company) having a specific surface area of 1,160 m²/g and an average particle size (D₅₀) of 5 *µ*m were additionally added, and the mixture was stirred at 8,000 rpm for 60 minutes to prepare a total of 500 g of a primary dispersion of carbon nanotubes.

(3) The primary dispersion of carbon nanotubes was homogeneously dispersed 7 times at a pressure of 14,000 psi using a high-pressure disperser (PICOMAX, manufactured by Micronox company) to prepare a secondary dispersion of carbon nanotubes.

### Example 2d

A carbon nanotube dispersion was prepared in the same manner as in the Example 1d, except that in the above Example 1d, the content of the first dispersant is 4.8 g (0.96 parts by weight relative to a total of 100 parts by weight of the carbon nanotube dispersion), and the content of the second dispersant is 1.2 g (0.24 parts by weight relative to a total of 100 parts by weight of the carbon nanotube dispersion).

### Example 3d

A carbon nanotube dispersion was prepared in the same manner as in the Example 1d, except that in the above Example 1d, the content of the first dispersant is 4.0 g (0.8 parts by weight relative to a total of 100 parts by weight of the carbon nanotube dispersion), and the content of the second dispersant is 2.0 g (0.4 parts by weight relative to a total of 100 parts by weight of the carbon nanotube dispersion).

### Comparative Example 1a

A carbon nanotube dispersion was prepared in the same manner as in the Example 1a, except that in the above Example 1a, the second dispersant is not added.

### Comparative Example 2a

A carbon nanotube dispersion was prepared in the same manner as in the Example 1a, except that in the above Example 1a, the content of the carbon nanotubes is 3.0 g (0.6 parts by weight relative to a total of 100 parts by weight of the carbon nanotube dispersion), the content of the first dispersant is 4.5 g (0.9 parts by weight relative to a total of 100 parts by weight of the carbon nanotube dispersion), and the second dispersant is not added.

### Comparative Example 3a

A carbon nanotube dispersion was prepared in the same manner as in the Example 1a, except that in the above Example 1a, the content of the first dispersant is 7.275 g (1.455 parts by weight relative to a total of 100 parts by weight of the carbon nanotube dispersion), and the content of the second dispersant is 0.225 g (0.045 parts by weight relative to a total of 100 parts by weight of the carbon nanotube dispersion).

### Comparative Example 4a

A carbon nanotube dispersion was prepared in the same manner as in the Example 1a, except that in the above Example 1a, the first dispersant is not added, and the content of the second dispersant is 7.5 g (1.5 parts by weight relative to a total of 100 parts by weight of the carbon nanotube dispersion).

### Comparative Example 5a

A carbon nanotube dispersion was prepared in the same manner as in the Example 1a, except that in the above Example 1a, the content of the first dispersant is 0.225 g (0.045 parts by weight relative to a total of 100 parts by weight of the carbon nanotube dispersion), and the content of the second dispersant is 7.275 g (1.455 parts by weight relative to a total of 100 parts by weight of the carbon nanotube dispersion).

### Comparative Example 6a

A carbon nanotube dispersion was prepared in the same manner as in the Example 3a, except that in the above Example 3a, 1.125 g (0.225 parts by weight relative to a total of 100 parts by weight of the carbon nanotube dispersion) of tristyrylphenol ethoxylate is used instead of Sulfochlorophenol S sodium calcium salt as the second dispersant.

### Comparative Example 7a

A carbon nanotube dispersion was prepared in the same manner as in the Example 3a, except that in the above Example 3a, 1.125 g (0.225 parts by weight relative to a total of 100 parts by weight of the carbon nanotube dispersion) of styrene maleic acid copolymer is used instead of Sulfochlorophenol S sodium calcium salt as the second dispersant.

### Comparative Example 1b

A carbon nanotube dispersion was prepared in the same manner as in the Example 1b, except that in the above Example 1b, the content of the carbon nanotubes is 1.0 part by weight relative to a total of 100 parts by weight of the carbon nanotube dispersion, the content of the first dispersant is 1.125 parts by weight relative to a total of 100 parts by weight of the carbon nanotube dispersion, and the second dispersant is not added.

### Comparative Example 2b

A carbon nanotube dispersion was prepared in the same manner as in the Example 1b, except that in the above Example 1b, the content of the carbon nanotubes is 1.0 part by weight relative to a total of 100 parts by weight of the carbon nanotube dispersion, the content of the first dispersant is 0.75 parts by weight relative to a total of 100 parts by weight of the carbon nanotube dispersion and the content of the second dispersant is 0.75 parts by weight relative to a total of 100 parts by weight of the carbon nanotube dispersion.

### Comparative Example 3b

A carbon nanotube dispersion was prepared in the same manner as in the Example 1b, except that in the above Example 1b, the content of the carbon nanotubes is 1.0 part by weight relative to a total of 100 parts by weight of the carbon nanotube dispersion, the content of the first dispersant is 1.4 parts by weight relative to a total of 100 parts by weight of the carbon nanotube dispersion and the content of the second dispersant is 0.1 parts by weight relative to a total of 100 parts by weight of the carbon nanotube dispersion.

### Comparative Example 4b

A carbon nanotube dispersion was prepared in the same manner as in the Example 1b, except that in the above Example 1b, the first dispersant is not added, and the content of the second dispersant is 1.2 parts by weight relative to a total of 100 parts by weight of the carbon nanotube dispersion.

### Comparative Example 5b

A carbon nanotube dispersion was prepared in the same manner as in the Example 1b, except that in the above Example 1b, the content of the carbon nanotubes is 0.6 parts by weight relative to a total of 100 parts by weight of the carbon nanotube dispersion, the content of the first dispersant is 0.675 parts by weight relative to a total of 100 parts by weight of the carbon nanotube dispersion and the content of tristyrylphenol ethoxylate as the second dispersant instead of Direct Red 28 is 0.225 parts by weight relative to a total of 100 parts by weight of the carbon nanotube dispersion.

### Comparative Example 6b

A carbon nanotube dispersion was prepared in the same manner as in the Example 1b, except that in the above Example 1b, the content of the carbon nanotubes is 0.6 parts by weight relative to a total of 100 parts by weight of the carbon nanotube dispersion, the content of the first dispersant is 0.675 parts by weight relative to a total of 100 parts by weight of the carbon nanotube dispersion and the content of styrene maleic acid copolymer as the second dispersant instead of Direct Red 28 is 0.225 parts by weight relative to a total of 100 parts by weight of the carbon nanotube dispersion.

### Comparative Example 1c

A carbon nanotube dispersion was prepared in the same manner as in the Example 1c, except that in the above Example 1c, the content of the first dispersant is 1.2 parts by weight relative to a total of 100 parts by weight of the carbon nanotube dispersion and the second dispersant is not added.

### Comparative Example 2c

A carbon nanotube dispersion was prepared in the same manner as in the Example 1c, except that in the above Example 1c, the content of the first dispersant is 0.6 parts by weight relative to a total of 100 parts by weight of the carbon nanotube dispersion, and the content of the second dispersant is 0.6 parts by weight relative to a total of 100 parts by weight of the carbon nanotube dispersion.

### Comparative Example 3c

A carbon nanotube dispersion was prepared in the same manner as in the Example 1c, except that in the above Example 1c, the content of the first dispersant is 1.12 parts by weight relative to a total of 100 parts by weight of the carbon nanotube dispersion, and the content of the second dispersant is 0.08 parts by weight relative to a total of 100 parts by weight of the carbon nanotube dispersion.

### Comparative Example 4c

A carbon nanotube dispersion was prepared in the same manner as in the Example 1c, except that in the above Example 1c, the first dispersant is not added and the content of the second dispersant is 1.2 parts by weight relative to a total of 100 parts by weight of the carbon nanotube dispersion.

### Comparative Example 5c

A carbon nanotube dispersion was prepared in the same manner as in the Example 1c, except that in the above Example 1c, the content of the carbon nanotubes is 0.6 parts by weight relative to a total of 100 parts by weight of the carbon nanotube dispersion, the content of the first dispersant is 0.675 parts by weight relative to a total of 100 parts by weight of the carbon nanotube dispersion and the content of tristyrylphenol ethoxylate as the second dispersant instead of Direct Yellow 4 is 0.225 parts by weight relative to a total of 100 parts by weight of the carbon nanotube dispersion.

### Comparative Example 6c

A carbon nanotube dispersion was prepared in the same manner as in the Example 1c, except that in the above Example 1c, the content of the carbon nanotubes is 0.6 parts by weight relative to a total of 100 parts by weight of the carbon nanotube dispersion, the content of the first dispersant is 0.675 parts by weight relative to a total of 100 parts by weight of the carbon nanotube dispersion and the content of styrene maleic acid copolymer as the second dispersant instead of Direct Yellow 4 is 0.225 parts by weight relative to a total of 100 parts by weight of the carbon nanotube dispersion.

### Comparative Example 1d

A carbon nanotube dispersion was prepared in the same manner as in the Example 1d, except that in the above Example 1d, the content of the first dispersant is 6.0 g (1.2 parts by weight relative to a total of 100 parts by weight of the carbon nanotube dispersion) and the second dispersant is not added.

### Comparative Example 2d

A carbon nanotube dispersion was prepared in the same manner as in the Example 1d, except that in the above Example 1d, the content of the first dispersant is 3.0 g (0.6 parts by weight relative to a total of 100 parts by weight of the carbon nanotube dispersion), and the content of the second dispersant is 3.0g (0.6 parts by weight relative to a total of 100 parts by weight of the carbon nanotube dispersion).

### Comparative Example 3d

A carbon nanotube dispersion was prepared in the same manner as in the Example 1d, except that in the above Example 1d, the content of the first dispersant is 5.6 g (1.12 parts by weight relative to a total of 100 parts by weight of the carbon nanotube dispersion), and the content of the second dispersant is 0.4 g (0.08 parts by weight relative to a total of 100 parts by weight of the carbon nanotube dispersion).

### Comparative Example 4d

A carbon nanotube dispersion was prepared in the same manner as in the Example 1d, except that in the above Example 1d, the content of the second dispersant is 6.0 g (1.2 parts by weight relative to a total of 100 parts by weight of the carbon nanotube dispersion) and the first dispersant is not added.

### Comparative Example 5d

A carbon nanotube dispersion was prepared in the same manner as in the Example 3d, except that in the above Example 3d, the content of the first dispersant is 3.375 g (0.6 parts by weight relative to a total of 100 parts by weight of the carbon nanotube dispersion), and the content of tristyrylphenol ethoxylate as the second dispersant instead of Direct Blue 53 (prepared by Sigma Aldrich company) is 1.125 g (0.225 parts by weight relative to a total of 100 parts by weight of the carbon nanotube dispersion).

### Comparative Example 6d

A carbon nanotube dispersion was prepared in the same manner as in the Example 3d, except that in the above Example 3d, the content of the first dispersant is 3.375 g (0.6 parts by weight relative to a total of 100 parts by weight of the carbon nanotube dispersion) and the content of styrene maleic acid copolymer as the second dispersant instead of Direct Blue 53 (prepared by Sigma Aldrich company) is 1.125 g (0.225 parts by weight relative to a total of 100 parts by weight of the carbon nanotube dispersion).

### Experimental Example

The viscosity of the carbon nanotube dispersions of the Examples 1a to 3a and Comparative Examples 1a to 7a was measured, and the viscosity was measured again after leaving them at 25 °C for one week, and the results are shown in Table 1 below.

The viscosity of the carbon nanotube dispersions of the Examples 1b to 5b and Comparative Examples 1b to 6b was measured, and the viscosity was measured again after leaving them at 25 °C for one week, and the results are shown in Table 2 below.

The viscosity of the carbon nanotube dispersions of the Examples 1c to 5c and Comparative Examples 1c to 6c was measured, and the viscosity was measured again after leaving them at 25 °C for one week, and the results are shown in Table 3 below.

The viscosity of the carbon nanotube dispersions of the Examples 1d to 3d and Comparative Examples 1d to 6d was measured, and the viscosity was measured again after leaving them at 25 °C for one week, and the results are shown in Table 4 below.

The viscosity was measured at 25 °C and 1 rpm using a viscometer (viscometer TV-25, Rotor Code 01, manufactured by TOKI SANGYO company).

**[Table 1]**

| | CNT content (parts by weight) | First dispersant | | Second dispersant | | Viscosity | | |
|---|---|---|---|---|---|---|---|---|
| | | Type | Content (parts by weight) | Type | Content (parts by weight) | After dispersion (Pa·s) | After one week (Pa·s) | Increase rate (%) |
| Example 1a | 1 | PVP | 1.125 | Sulfochlorophe nol S sodium calcium salt | 0.375 | 8.4 | 8.9 | 6.0 |
| Example 2a | 1 | PVP | 1.000 | Sulfochlorophe nol S sodium calcium salt | 0.500 | 8.9 | 9.7 | 6.7 |
| Example 3a | 0.6 | PVP | 0.675 | Sulfochlorophe nol S sodium calcium salt | 0.225 | 2.8 | 2.87 | 2.5 |
| Comparative Example 1a | 1 | PVP | 1.125 | - | - | 24.0 | 30.0 | 25.0 |
| Comparative Example 2a | 0.6 | PVP | 0.900 | - | - | 12.0 | 14.6 | 21.7 |
| Comparative Example 3a | 1 | PVP | 1.455 | Sulfochlorophe nol S sodium calcium salt | 0.045 | 21.5 | 25.5 | 18.6 |
| Comparative Example 4a | 1 | - | - | Sulfochlorophe nol S sodium calcium salt | 1. 500 | viscosity cannot be measured | viscosity cannot be measured | viscosity cannot be measured |
| Comparative Example 5a | 1 | PVP | 0.045 | Sulfochlorophe nol S sodium calcium salt | 1. 455 | viscosity cannot be measured | viscosity cannot be measured | viscosity cannot be measured |
| Comparative Example 6a | 0.6 | PVP | 0.675 | tristyrylpheno l ethoxylate | 0.225 | 18.4 | 24.5 | 33.2 |
| Comparative Example 7a | 0.6 | PVP | 0.675 | styrene maleic acid copolymer | 0.225 | 9.7 | 17.0 | 75.3 |

| | | | | | | | | |
|---|---|---|---|---|---|---|---|---|
| (* The content of CNT, the first dispersant and the second dispersant is based on a total of 100 parts by weight of the carbon nanotube dispersion) | | | | | | | | |

Referring to the Table 1, it can be confirmed that, compared to the carbon nanotube dispersion of Comparative Example 1a containing only polyvinylpyrrolidone as the first dispersant, the carbon nanotube dispersions of Examples 1a to 3a containing the first dispersant and Sulfochlorophenol S sodium calcium salt, which is a compound represented by Formula 1 of the present invention, as the second dispersant, have a low initial viscosity immediately after dispersing the carbon nanotubes in an aqueous solvent, and in particular, the increase in viscosity of the carbon nanotube dispersions over time is very effectively suppressed.

In the case of the carbon nanotube dispersion of Comparative Example 2a, it can be seen that the content of carbon nanotubes was reduced, as compared to the carbon nanotube dispersion of Comparative Example 1a, so that the initial viscosity immediately after dispersing the carbon nanotubes in an aqueous solvent and the viscosity of the dispersion after 1 week were reduced compared to the carbon nanotube dispersion of Comparative Example 1a, but as with the carbon nanotube dispersion of Comparative Example 1a, since the second dispersant comprising the compound represented by Formula 1 of the present invention is not contained as compared to Examples 1a to 3a, the effect of suppressing the increase in the viscosity of the dispersion according to the change over time is not expressed.

In the case of the carbon nanotube dispersion of Comparative Example 3a, it can be seen that since the second dispersant, which is a compound represented by Formula 1 according to the present invention, is contained in an amount less than a certain content, the initial viscosity immediately after dispersing carbon nanotubes in an aqueous solvent is high.

In the case of the carbon nanotube dispersions of Comparative Examples 4a and 5a, since the first dispersant was not contained (Comparative Example 4a) or the first dispersant was contained in an amount less than a certain content (Comparative Example 5a), as compared to the carbon nanotube dispersions of Examples 1a to 3a, the carbon nanotubes could not be completely dispersed in the aqueous solvent, and agglomeration of the dispersion was occurred, making it impossible to measure the viscosity.

In the case of the carbon nanotube dispersions of Comparative Examples 6a and 7a, it can be seen that since the compound represented by Formula 1 according to the present invention is not used as the second dispersant, as compared to the carbon nanotube dispersions of Examples 1a to 3a, the initial viscosity immediately after dispersing the carbon nanotubes in the aqueous solvent is high, and the effect of suppressing the increase in the viscosity of the carbon nanotube dispersion over time is not expressed.

**[Table 2]**

| | CNT content (parts by weight) | First dispersant | | Second dispersant | | Viscosity | | |
|---|---|---|---|---|---|---|---|---|
| | | Type | Content (parts by weight) | Type | Content (parts by weight) | After disper sion (Pa·s) | After one week (Pa·s) | Increase rate (%) |
| Example 1b | 0.8 | PVP | 0.9 | Direct Red 28 | 0.3 | 3.7 | 3.9 | 5 |
| Example 2b | 1 | PVP | 1.125 | Direct Red 28 | 0.375 | 5.4 | 5.6 | 4 |
| Example 3b | 1 | PVP | 1.2 | Direct Red 28 | 0.3 | 6.0 | 6.3 | 5 |
| Example 4b | 1 | PVP | 1 | Direct Red 28 | 0.5 | 5.3 | 5.4 | 2 |
| Example 5b | 0.8 | PVP | 0.9 | Direct Red 7 | 0.3 | 4.2 | 4.5 | 7 |
| Comparative Example 1b | 1 | PVP | 1.125 | - | 0 | 23.0 | 30.0 | 30 |
| Comparative Example 2b | 1 | PVP | 0.75 | Direct Red 28 | 0.75 | 11.6 | 16.0 | 38 |
| Comparative Example 3b | 1 | PVP | 1.4 | Direct Red 28 | 0.1 | 14.9 | 20.0 | 54 |
| Comparative Example 4b | 0.8 | - | 0 | Direct Red 28 | 1.2 | 5.2 | 8.3 | 60 |
| Comparative Example 5b | 0.6 | PVP | 0.675 | tristyrylphenol ethoxylate | 0.225 | 18.4 | 24.5 | 33 |
| Comparative Example 6b | 0.6 | PVP | 0.675 | styrene maleic acid copolymer | 0.225 | 9.7 | 17.0 | 75 |

| | | | | | | | | |
|---|---|---|---|---|---|---|---|---|
| (* The content of CNT, the first dispersant and the second dispersant is based on a total of 100 parts by weight of the carbon nanotube dispersion) | | | | | | | | |

Referring to Table 2 above, it can be confirmed that, compared to the carbon nanotube dispersion of Comparative Example 1b containing only polyvinylpyrrolidone as the first dispersant, the carbon nanotube dispersions of Examples 1b to 5b comprising the first dispersant and the second dispersant comprising Direct Red 28, which is a compound containing at least two azo groups and two or more sulfonate groups, have low initial viscosity immediately after dispersing the carbon nanotubes in an aqueous solvent, and in particular, the increase in viscosity of the carbon nanotube dispersion over time is very effectively suppressed.

In the case of the carbon nanotube dispersions of Comparative Examples 2b and 3b, it can be seen that the initial viscosity immediately after dispersion is reduced compared to Comparative Example 1b by containing the first dispersant and the second dispersant in the carbon nanotube dispersion, but since the weight ratio of the second dispersant to the first dispersant in the carbon nanotube dispersion exceeds 100:90, electrostatic repulsion between the dispersants of the second dispersant containing at least two sulfonate groups is strongly formed (Comparative Example 2b), or since the weight ratio of the second dispersant is less than 100:10, the interaction between the second dispersant and the carbon nanotubes and between the dispersants is not formed smoothly, so that a stable dispersion state of the carbon nanotube dispersion is not maintained, and thus the effect of suppressing the increase in the viscosity of the dispersion over time is not expressed (Comparative Examples 2b and 3b).

In the case of the carbon nanotube dispersion of Comparative Example 4b, it can be seen that since the first dispersant is not contained as compared to the carbon nanotube dispersions of Examples 1b to 5b, the second dispersant exceeds 145 parts by weight based on 100 parts by weight of carbon nanotubes in the carbon nanotube dispersion, and thus electrostatic repulsion between the second dispersants is strongly formed, so that the stable dispersion state of the carbon nanotube dispersion is not maintained, and agglomeration of the dispersion occurs, and thus the effect of suppressing the increase in the viscosity of the dispersion over time is not expressed.

In the case of the carbon nanotube dispersions of Comparative Examples 5b and 6b, it can be seen that since the material including the compound including at least two azo groups and two or more sulfonate groups of Examples 1b to 5b is not used as the second dispersant, the initial viscosity immediately after dispersing carbon nanotubes in an aqueous solvent is high (Comparative Example 5b), and the effect of suppressing the increase in viscosity of the carbon nanotube dispersion over time is not expressed (Comparative Examples 5b and 6b).

**[Table 3]**

| | CNT content (parts by weight) | First dispersant | | Second dispersant | | Viscosity | | |
|---|---|---|---|---|---|---|---|---|
| | | Type | Content (parts by weight) | Type | Content (parts by weight) | After disper sion (Pa·s) | After one week (Pa·s) | Increase rate (%) |
| Example 1c | 0.8 | PVP | 0.9 | Direct Yellow 4 | 0.3 | 3.5 | 3.7 | 6% |
| Example 2c | 0.8 | PVP | 0.96 | Direct Yellow 4 | 0.24 | 3.2 | 3.3 | 3% |
| Example 3c | 0.8 | PVP | 0.8 | Direct Yellow 4 | 0.4 | 3.3 | 3.4 | 3% |
| Example 4c | 0.8 | PVP | 1.0 | Direct Yellow 4 | 0.8 | 3.8 | 4.0 | 5% |
| Example 5c | 0.8 | PVP | 2.4 | Direct Yellow 4 | 1.2 | 4.2 | 4.6 | 10% |
| Comparative Example 1c | 0.8 | PVP | 1.2 | - | 0 | 18.5 | 26.8 | 45% |
| Comparative Example 2c | 0.8 | PVP | 0.6 | Direct Yellow 4 | 0.6 | 11.2 | 14.9 | 33% |
| Comparative Example 3c | 0.8 | PVP | 1.12 | Direct Yellow 4 | 0.08 | 13.9 | 21.0 | 51% |
| Comparative Example 4c | 0.8 | - | 0 | Direct Yellow 4 | 1.2 | 0.8 | 14.1 | 72% |
| Comparative Example 5c | 0.6 | PVP | 0.675 | tristyrylphenol ethoxylate | 0.225 | 18.4 | 24.5 | 33% |
| Comparative Example 6c | 0.6 | PVP | 0.675 | styrene maleic acid copolymer | 0.225 | 9.7 | 17.0 | 75% |

| | | | | | | | | |
|---|---|---|---|---|---|---|---|---|
| (* The content of CNT, the first dispersant and the second dispersant is based on a total of 100 parts by weight of the carbon nanotube dispersion) | | | | | | | | |

Referring to Table 3 above, it can be confirmed that, compared to the carbon nanotube dispersion of Comparative Example 1c containing only polyvinylpyrrolidone as the first dispersant, the carbon nanotube dispersions of Examples 1c to 5c, which comprise the first dispersant and the second dispersant comprising Direct Yellow 4, a compound containing at least two azo groups, two or more sulfonate groups and two or more hydroxyl groups, have a low initial viscosity immediately after dispersing carbon nanotubes in an aqueous solvent, and in particular, the increase in viscosity of the carbon nanotube dispersions over time is very effectively suppressed.

In the case of the carbon nanotube dispersions of Comparative Examples 2c and 3c, it can be seen that the initial viscosity immediately after dispersion is reduced compared to Comparative Example 1c by containing the first dispersant and the second dispersant in the carbon nanotube dispersion, but since the weight ratio of the second dispersant to the first dispersant in the carbon nanotube dispersion exceeds 100:90, electrostatic repulsion between the dispersants of the second dispersant containing at least two sulfonate groups and a hydroxyl group and hydrogen bonds between the dispersant and the solvent are strongly formed (Comparative Example 2c), or since the weight ratio of the second dispersant is less than 100:10, the interaction between the second dispersant and the carbon nanotubes and between the dispersants is not formed smoothly, so that a stable dispersion state of the carbon nanotube dispersion is not maintained, and thus the effect of suppressing the increase in the viscosity of the dispersion over time is not expressed (Comparative Examples 2c and 3c).

In the case of the carbon nanotube dispersion of Comparative Example 4c, it can be seen that since the first dispersant is not contained as compared to the carbon nanotube dispersions of Examples 1c to 5c, the second dispersant exceeds 150 parts by weight based on 100 parts by weight of carbon nanotubes in the carbon nanotube dispersion, and thus electrostatic repulsion between the second dispersants and hydrogen bonds between the dispersant and the solvent are strongly formed, so that the stable dispersion state of the carbon nanotube dispersion is not maintained, and agglomeration of the dispersion occurs, and thus the effect of suppressing the increase in the viscosity of the dispersion over time is not expressed.

In the case of the carbon nanotube dispersions of Comparative Examples 5c and 6c, it can be seen that since material comprising the compound containing at least two azo groups, two or more sulfonate groups and two or more hydroxyl groups of Examples 1c to 5c is not used as the second dispersant, the initial viscosity immediately after dispersing carbon nanotubes in an aqueous solvent is high (Comparative Example 5c), and the effect of suppressing the increase in viscosity of the carbon nanotube dispersion over time is not expressed (Comparative Examples 5c and 6c).

**[Table 4]**

| | CNT content (parts by weight) | First dispersant | | Second dispersant | | Ratio | Viscosity | | |
|---|---|---|---|---|---|---|---|---|---|
| | | Type | Content (parts by weight) | Type | Content (parts by weight) | | After disper sion (Pa·s) | After one week (Pa·s) | Increase rate (%) |
| Example 1d | 0.8 | PVP | 0.9 | Direct Blue 53 | 0.3 | 100:33 | 3.6 | 3.7 | 3.0 |
| Example 2d | 0.8 | PVP | 0.96 | DirectBlue 53 | 0.24 | 100:25 | 3.5 | 3.6 | 3.0 |
| Example 3d | 0.8 | PVP | 0.8 | DirectBlue 53 | 0.4 | 100:50 | 3.9 | 4.1 | 5.0 |
| Comparative Example 1d | 0.8 | PVP | 1.2 | - | - | - | 18.5 | 26.8 | 45. 0 |
| Comparative Example 2d | 0.8 | PVP | 0.6 | DirectBlue 53 | 0.6 | 100:100 | 12.1 | 16.7 | 38. 0 |
| Comparative Example 3d | 0.8 | PVP | 1.12 | DirectBlue 53 | 0.08 | 100:7.1 | 16.9 | 24.0 | 42.0 |
| Comparative Example 4d | 0.8 | - | - | DirectBlue 53 | 1.2 | - | 7.9 | 13.0 | 65.0 |
| Comparative Example 5d | 0.6 | PVP | 0.675 | tristyrylph enol ethoxylate | 0.225 | 100:33 | 18.4 | 24.5 | 33.0 |
| Comparative Example 6d | 0.6 | PVP | 0.675 | styrene maleic acid copolymer | 0.225 | 100:33 | 9.7 | 17.0 | 75. 0 |

| | | | | | | | | | |
|---|---|---|---|---|---|---|---|---|---|
| (* The content of CNT, the first dispersant and the second dispersant is based on a total of 100 parts by weight of the carbon nanotube dispersion) (* The 'ratio' is a weight ratio of the second dispersant relative to the first dispersant) | | | | | | | | | |

Referring to Table 4 above, it can be confirmed that, compared to the carbon nanotube dispersion of Comparative Example 1d containing only polyvinylpyrrolidone as the first dispersant, the carbon nanotube dispersions of Examples 1d to 3d containing Direct Blue 53, which is a compound represented by Formula 1 of the present invention, as the second dispersant have lower initial viscosity immediately after dispersing the carbon nanotubes in an aqueous solvent, and in particular, the increase in viscosity of the carbon nanotube dispersion over time is very effectively suppressed.

In the case of the carbon nanotube dispersions of Comparative Examples 2d and 3d, it can be seen that since the second dispersant is excessively contained (Comparative Example 2d) or contained in an amount less than a certain content (Comparative Example 3d) as compared to the carbon nanotube dispersions of Examples 1d to 3d, the initial viscosity immediately after dispersing the carbon nanotubes in the aqueous solvent is high, and the effect of suppressing the increase in the viscosity of the dispersion over time is not expressed.

In the case of the carbon nanotube dispersion of Comparative Example 4d, it can be confirmed that there is a problem that the viscosity of the carbon nanotube dispersion is rapidly increased over time due to the absence of the first dispersant as compared to the carbon nanotube dispersions of Examples 1d to 3d.

In the case of the carbon nanotube dispersions of Comparative Examples 5d and 6d, it can be seen that since the compound represented by Formula 1 according to the present invention is not used as the second dispersant compared to the carbon nanotube dispersions of Examples 1d to 3d, the initial viscosity immediately after dispersing the carbon nanotubes in the aqueous solvent is high, and the effect of suppressing the increase in the viscosity of the carbon nanotube dispersion over time is not expressed.

Accordingly, it was confirmed that only when the carbon nanotube dispersion formed by dispersing carbon nanotubes in an aqueous solvent contains the first dispersant containing nitrogen atoms and the second dispersant containing the compound represented by Formula 1 according to the present invention and the first dispersant and the second dispersant are contained at a certain weight ratio, the carbon nanotube dispersion exhibits low viscosity, and the increase in viscosity over time can be suppressed.

In the above, although the preferred embodiments of the present invention have been described in detail, the scope of the present invention is not limited thereto, and various modifications and improvements made by those skilled in the art using the basic concept of the present invention defined in the claims below also fall within the scope of the present invention.

## Claims

1. A carbon nanotube dispersion, comprising:
carbon nanotubes;
a first dispersant containing nitrogen atoms;
a second dispersant containing a compound represented by Formula 1 below; and
a solvent: 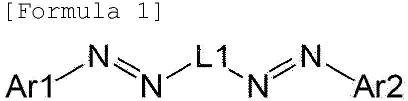
wherein,
Ar1 and Ar2 are each independently a substituted or unsubstituted C6 to C30 aryl group, and
L1 is a substituted or unsubstituted C6 to C30 arylene group.

2. The carbon nanotube dispersion according to claim 1, wherein Ar1 and Ar2 in the Formula 1 are represented by Formula 2 or Formula 3, respectively: 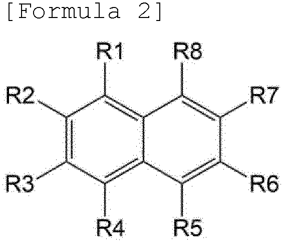 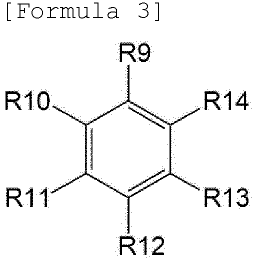 in the Formula 2,
R1 to R8 are the same as or different from each other, and are each independently hydrogen; deuterium; halogen; a cyano group; a sulfonate group; a hydroxyl group; an amine group; a nitro group; a substituted or unsubstituted C1 to C10 alkyl group; a substituted or unsubstituted C1 to C10 alkoxy group; or a part that connects to Formula 2, provided that any one of the R1 to R8 is a part connected to an azo group in Formula 1, and
in the Formula 3,
R9 to R14 are the same as or different from each other, and are each independently hydrogen; deuterium; halogen; a cyano group; a sulfonate group; an amine group; a nitro group; a substituted or unsubstituted C1 to C10 alkyl group; a substituted or unsubstituted C1 to C10 alkoxy group; or a part that connects to Formula 3, provided that any one of the R9 to R14 is a part connected to an azo group in Formula 1.

3. The carbon nanotube dispersion according to claim 1, wherein L1 in the Formula 1 is represented by Formula 4 or Formula 5 below: 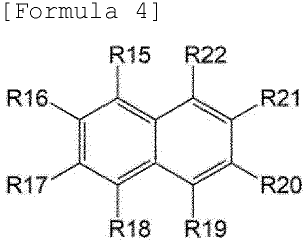 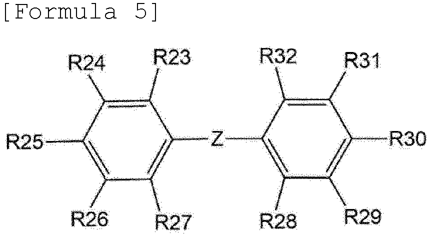 in the Formula 4,
R15 to R18 are the same as or different from each other, and are each independently hydrogen; deuterium; halogen; a cyano group; a sulfonate group; a hydroxyl group; an amine group; a nitro group; or the part that connects to Formula 1, provided that any one of the R15 to R18 is the part that connects to the nitrogen atom, to which Ar1 is not connected, among two nitrogen atoms of the Ar1-connected azo group of the two azo groups of Formula 1, and R19 to R22 are the same as or different from each other, and are each independently hydrogen; deuterium; halogen; a cyano group; a sulfonate group; a hydroxyl group; an amine group; a nitro group; or the part that connects to Formula 1, provided that any one of the R19 to R22 is the part that connects to the nitrogen atom, to which Ar2 is not connected, among two nitrogen atoms of the Ar2-connected azo group of the two azo groups of Formula 1; and
in the Formula 5,
R23 to R27 are the same as or different from each other, and are each independently hydrogen; deuterium; halogen; a cyano group; a sulfonate group; a hydroxyl group; an amine group; a nitro group; a substituted or unsubstituted C1 to C5 alkyl group; a substituted or unsubstituted C1 to C5 alkoxy group; or the part that connects to the nitrogen atom, to which Ar1 is not connected, among two nitrogen atoms of the Ar1-connected azo group of the two azo groups of Formula 1, provided that any one of the R23 to R27 is the part that connects to the nitrogen atom, to which Ar1 is not connected, among two nitrogen atoms of the Ar1-connected azo group of the two azo groups of Formula 1, and R28 to R32 are the same as or different from each other, and are each independently hydrogen; deuterium; halogen; a cyano group; a sulfonate group; a hydroxyl group; an amine group; a nitro group; a substituted or unsubstituted C1 to C5 alkyl group; a substituted or unsubstituted C1 to C5 alkoxy group; or the part that connects to the nitrogen atom, to which Ar2 is not connected, among two nitrogen atoms of the Ar2-connected azo group of the two azo groups of Formula 1, provided that any one of the R28 to R32 is the part that connects to the nitrogen atom, to which Ar2 is not connected, among two nitrogen atoms of the Ar2-connected azo group of the two azo groups of Formula 1, and
Z is a single bond; a substituted or unsubstituted C2 to C10 alkenylene group; or a substituted or unsubstituted C2 to C10 alkynylene group.

4. The carbon nanotube dispersion according to claim 1, wherein the second dispersant comprises the compound represented by any one of Formula 1-1a to Formula 1-1d below: 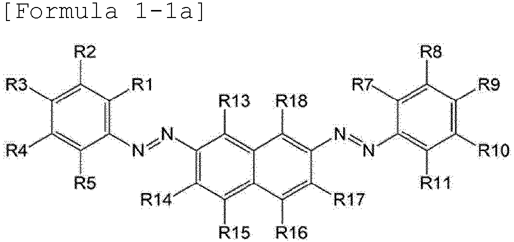 wherein,
R1 to R5, R7 to R11, and R13 to R18 are the same as or different from each other, and are each independently hydrogen; deuterium; halogen; a cyano group; a sulfonate group; a hydroxyl group; an amine group; or a nitro group; 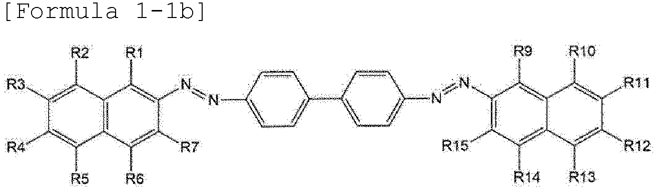
wherein,
R1 to R7 and R9 to R15 are the same as or different from each other and are each independently hydrogen; deuterium; halogen; a cyano group; a sulfonate group; a hydroxyl group; an amine group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; or a substituted or unsubstituted C6 to C20 aryl group, provided that at least one of R1 to R7 is a sulfonate group, and at least one of R9 to R15 is a sulfonate group; 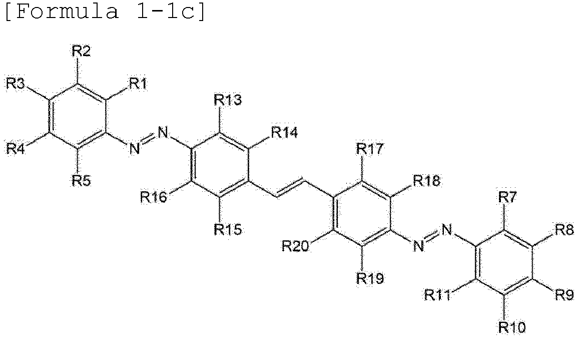
wherein,
R1 to R5 and R7 to R11 are the same as or different from each other, and are each independently hydrogen; deuterium; halogen; a cyano group; a sulfonate group; a hydroxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C6 to C20 aryl group; or a substituted or unsubstituted C2 to C20 heteroaryl group, provided that at least one of R1 to R5 is a hydroxyl group, and at least one of R7 to R11 is a hydroxyl group, and
R13 to R20 are the same as or different from each other, and are each independently hydrogen; deuterium; halogen; a cyano group; a sulfonate group; a hydroxyl group; a substituted or unsubstituted C1 to C10 alkyl group; a substituted or unsubstituted C2 to C10 alkenyl group; a substituted or unsubstituted C2 to C10 alkynyl group; a substituted or unsubstituted C1 to C10 alkoxy group; a substituted or unsubstituted C6 to C20 aryl group; or a substituted or unsubstituted C2 to C20 heteroaryl group, provided that at least one of R13 to R16 is a sulfonate group, and at least one of R17 to R20 is a sulfonate group; 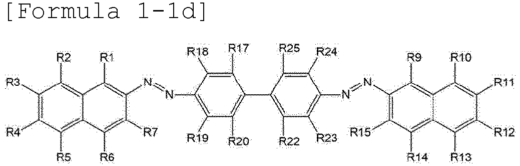
wherein,
R1 to R7 and R9 to R15 are the same or different from each other and are each independently hydrogen; deuterium; halogen; a cyano group; a sulfonate group; a hydroxyl group; an amine group; or a nitro group, and
R17 to R20 and R22 to R25 are the same as or different from each other, and are each independently hydrogen; deuterium; halogen; a cyano group; a sulfonate group; a hydroxyl group; an amine group; a nitro group; a substituted or unsubstituted C1 to C5 alkyl group; or a substituted or unsubstituted C1 to C5 alkoxy group.

5. The carbon nanotube dispersion according to claim 1, wherein the carbon nanotubes are contained in an amount of 0.05 to 5 parts by weight based on 100 parts by weight of the carbon nanotube dispersion.

6. The carbon nanotube dispersion according to claim 1, wherein the BET specific surface area of the carbon nanotube is 800 to 2,000 m²/g.

7. The carbon nanotube dispersion according to claim 1, wherein the first dispersant is at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride and polyethylenimine.

8. The carbon nanotube dispersion according to claim 1, wherein the first dispersant is contained in an amount of 0.01 to 10 parts by weight based on 100 parts by weight of the carbon nanotube dispersion.

9. The carbon nanotube dispersion according to claim 1, wherein the second dispersant is contained in an amount of 0.001 to 9 parts by weight based on 100 parts by weight of the carbon nanotube dispersion.

10. The carbon nanotube dispersion according to claim 1, wherein the first dispersant and the second dispersant are contained in a weight ratio of 100:10 to 100:90.

11. The carbon nanotube dispersion according to claim 1, wherein the carbon nanotube dispersion has an initial viscosity of 1 to 10 Pa·s as measured at 25 °C and 1 rpm.

12. The carbon nanotube dispersion according to claim 1, wherein the carbon nanotube dispersion has a viscosity increase rate of 15% or less, as expressed by Equation 1 below: Viscosity increase rate (%) = {(viscosity measured after leaving for 1 week at 25°C - initial viscosity)/initial viscosity} × 100.

13. A method for preparing the carbon nanotube dispersion according to claim 1, comprising the steps of,
(1) preparing a primary dispersion of carbon nanotubes by mixing carbon nanotubes, a first dispersant containing nitrogen atoms, a second dispersant containing the compound represented by Formula 1 below and a solvent; and
(2) dispersing the primary dispersion of the carbon nanotubes to prepare a secondary dispersion of carbon nanotubes: 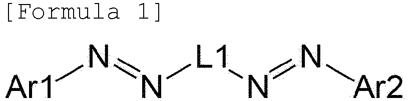 wherein,
Ar1 and Ar2 are each independently a substituted or unsubstituted C6 to C30 aryl group, and
L1 is a substituted or unsubstituted C6 to C30 arylene group.
